# FASCICULE DE BREVET EUROPEEN

(11) **EP 1 521 157 B1**
(45) Date de publication et mention de la délivrance du brevet: **09.08.2006**
(21) Numéro de dépôt: 04023427.0
(22) Date de dépôt: 01.10.2004
(51) Int. Cl.: G05G 1/14, B60K 26/02, B60T 13/567

(54) **Procédé de montage d'un dispositif de commande dans un véhicule automobile, dispositif de retenue provisoire pour la mise en oeuvre dudit procédé**
Verfahren zur Befestigung eine Steuereinrichtung eines Kraftfahrzeuges und vorübergehende Befestigungungsvorrichtung zur Durchführung des Verfahrens
Method of mounting a control device in a motor vehicle and temporary retaining device for performing said method

(30) Priorité: 01.10.2003 FR 0311522
(43) Date de publication de la demande: 06.04.2005
(73) Titulaire: ROBERT BOSCH GMBH, 70442 Stuttgart (DE)
(72) Inventeur: Richard, Philippe, 77500 Chelles (FR); Maligne, Jean-Charles, 93300 Aubervilliers (FR)
(74) Mandataire: Hurwic, Aleksander Wiktor

(56) Documents cités:
- FR-A- 2 611 284
- FR-A- 2 826 409

## Description

La présente invention se rapporte à un procédé de montage d'un dispositif de commande dans un véhicule automobile, et à un dispositif de retenue provisoire pour la mise en oeuvre dudit procédé

Les véhicules automobiles de type connu comporte un dispositif de commande de freinage monté dans un compartiment moteur et commandé par une tige de commande actionnée à partir d'un habitacle au moyen d'une pédale de frein montée à un extrémité de la tige de commande. L'habitacle est séparé du compartiment moteur par un tablier rigide sur lequel sont fixés le dispositif de freinage et la pédale de frein.
La pédale de frein comporte une âme montée à une première extrémité en rotation par rapport au tablier au moyen d'un boîtier de pédalier et munie à une deuxième extrémité d'un élément d'application d'un effort de freinage par un conducteur automobile.

Le dispositif de freinage comporte de manière connu un maître-cylindre et un servomoteur d'assistance pneumatique au freinage interposé entre la tige de commande et le maître-cylindre, la tige de commande étant montée à une première extrémité de manière rotulante dans un plongeur d'une valve trois voies du servomoteur et à une deuxième extrémité par une liaison pivot à la pédale de frein. Un tel dispositif est divulgué dans FR-A-2 611 284.

Lors du montage du dispositif de freinage, le servomoteur muni de la tige de commande est amené dans le compartiment moteur, la tige de commande pénétrant dans l'habitacle par un orifice pratiqué dans le tablier, le servomoteur est fixé au tablier par des ensembles v is-écrous p uis 1 a t ige d commande comportant à sa deuxième extrémité une chape de fixation à l'âme de la pédale est solidarisée en rotation à la pédale de frein au moyen d'une goupille.
Or ce procédé de montage est long et complexe , puisqu'il nécessite d'intervenir à la fois dans le compartiment moteur et dans l'habitacle et par conséquent requiert l'intervention de deux opérateurs. Cependant ce procédé a l'avantage d'être d'un grande sûreté car chaque étape est vérifiée directement par les opérateurs.

Il est également connu des dispositif de freinage dans lequel la tige de commande est composite, une première partie de la tige de commande est solidaire de la pédale de frein et une deuxième partie est solidaire du servomoteur. Le montage du servomoteur s'effectue directement dans le compartiment moteur sans avoir à intervenir dans l'habitacle, les première et deuxième parties de la tige de commande étant solidarisé par encliquetage lors d'un montage en aveugle dans le compartiment moteur du dispositif de freinage.
Ce procédé de montage nécessite d'une part le maintien de la pédale de frein dans une position avancée par rapport la position repos de la pédale de frein afin de garantir que la pédale de frein ne recule sous l'effort d'encliquetage et d'autre part une orientation de la première partie de la tige de commande de manière à ce qu'elle soit sensiblement coaxial à la deuxième partie de la tige de commande.

Il a été prévu un dispositif de maintien sous la forme d'une cale munie de tétons formant des éléments de blocage angulaire de la pédale par rapport à la chape du pédalier et de la première partie de la tige de commande par rapport à l'âme de la pédale.

Le dispositif de retenue est mise en place par le fabricant du tablier duquel est solidaire le pédalier.

Ce procédé de montage est rapide et un seul opérateur est alors nécessaire, cependant il est possible du fait du montage en aveugle du dispositif de freinage que l'encliquetage de la première et de la deuxième parties de la tige de commande n'ait pas lieu. Il faut alors vérifier la liaison entre les deux parties de la tige de commande en contrôlant directement dans l'habitacle ou en déplaçant le servomoteur en éloignement de la pédale. Mais la vérification dans l'habitacle fait perdre le gain de temps obtenu par le montage du dispositif de freinage directement par le compartiment moteur. De plus, il se peut que le monteur oublie de vérifier dans l'habitacle que les première et deuxième parties de la tige de commande sont bien solidarisées. Dans ce cas toute application sur la pédale de frein est sans effet.

C'est par conséquent un but de la présente invention d'offrir un procédé de montage rapide et d'une très grande sécurité d'un dispositif de freinage dans un véhicule automobile, nécessitant une étape de vérification de la liaison entre la première et la deuxième parties de la tige de commande avant de fixer le servomoteur au tablier.

C'est également un but de la présente invention d'offrir un dispositif de mise en oeuvre dudit procédé, simple et économique.

Ces buts sont atteints par un procédé de montage d'un dispositif de commande dans un véhicule automobile, le véhicule comportant une pédale, un dispositif de retenue provisoire de la pédale par rapport à la chape, ledit dispositif de commande et ladite pédale comportant respectivement des moyens de liaison l'un à l'autre comportant entre autres une étape de vérification rapide de la liaison axiale entre la dispositif de commande et la pédale s'effectuant depuis le compartiment moteur.

En d'autres termes, le procédé de montage selon la présente invention comporte l'étape de déplacer le dispositif de commande en éloignement de l'habitacle de manière à vérifier si la pédale de frein est effectivement lié au dispositif de commande, de la pédale provoquant une modification de position du dispositif de retenue informant de l'accrochage du système de commande à la pédale.

La présente invention a principalement pour objet un procédé de montage d'un dispositif de commande dans un véhicule automobile, ledit dispositif étant destiné à être monté dans un compartiment moteur dudit véhicule et à être commandé par l'intermédiaire d'une tige de commande reliée à une pédale à partir d'un habitacle, ledit véhicule comportant un pédalier monté dans l'habitacle du véhicule automobile, ledit pédalier étant muni d'un boîtier de pédalier monté fixe sur un tablier de séparation du compartiment moteur de l'habitacle, une pédale montée solidaire en rotation par rapport à ladite chape, ledit dispositif de commande et ladite pédale comportant respectivement des moyens de liaison de l'un à l'autre, un dispositif de retenue provisoire étant monté sur la pédale et le pédalier de manière à ce que la pédale soit maintenue dans une position déterminée et à ce que les moyens de liaison de la pédale au dispositif, de commande, portés par la pédale soient maintenus dans une direction déterminée, ledit procédé comportant entre autres les étapes :
- d'amener le dispositif de commande dans le compartiment moteur de manière à mettre les moyens de liaison portés respectivement par la pédale et le dispositif de commande en regard l'un de l'autre ;
- de déplacer le servomoteur en direction de l'habitacle et de solidariser le dispositif de commande à la pédale ;
   **caractérisé en ce qu'il comporte également les étapes de :**
- de vérifier si la liaison solidaire entre la pédale et le dispositif de commande est effective en déplaçant le dispositif de commande en éloignement de l'habitacle de manière à entraîner la pédale par l'intermédiaire de la tige de commande et à faire passer le dispositif de retenue provisoire d'une première position à une deuxième position ;
- de fixer le dispositif de commande au tablier du véhicule automobile.

La présente invention a également pour objet un procédé de montage caractérisé en ce que le dispositif de commande est un dispositif de freinage comportant un servomoteur d'assistance pneumatique au freinage et en ce que la pédale est une pédale de frein.

La présente invention a également pour objet un procédé de montage caractérisé en ce que le passage de la première position à la deuxième position s'effectue par déséquilibrage dudit dispositif de retenue

La présente invention a également pour objet un procédé caractérisé en ce que la deuxième position de l'élément de retenue est une position éloignée de la pédale et de la chape du pédalier.

La présente invention a également pour objet un procédé caractérisé en ce que la deuxième position est obtenue par gravité.

La présente invention a également pour objet un procédé caractérisé en ce que la pédale de frein porte une première partie de la tige de commande et le servomoteur porte une deuxième partie de la tige de commande et en ce que lesdites premières et deuxièmes parties comportent des moyens d'accrochage mutuel.

La présente invention a également pour objet un procédé de montage caractérisé en ce que les moyens d'accrochage mutuel sont des moyens d'encliquetage formés par un élément mâle et un élément femelle portés par les première et deuxième parties et en ce que l'élément femelle comporte un moyen élastique d'encliquetage.

La présente invention a également pour objet un procédé caractérisé en ce que le moyen élastique d'encliquetage est une épingle.

La présente invention a aussi pour objet un dispositif de retenue provisoire d'une pédale par r apport à u ne chape d ans u ne p osition d éterminée e de moyens de liaison de la pédale à un dispositif de commande dans une direction déterminée pour la mise en oeuvre d'un processus caractérisé en ce qu'il passe d'une première position à une deuxième position pour détecter l'achèvement dudit processus.

La présente invention a également pour objet un dispositif caractérisé en ce que ledit dispositif de retenue est monté en réaction à cheval sur la chape du pédalier et sur une âme de la pédale.

La présente invention a également pour objet un dispositif caractérisé en ce que ledit dispositif de retenue comporte un premier appui sur l'âme de la pédale et un deuxième appui sur le boîtier de pédalier.

La présente invention a également pour objet un dispositif de retenue caractérisé en ce qu'il comporte un logement de réception et de retenue d'un élément en saillie de l'âme de la pédale réalisant le premier appui.

La présente invention a également pour objet un dispositif de retenue caractérisé en ce que le logement comporte un redent de retenue de l'élément en saillie.

La présente invention a également pour objet un dispositif de retenue caractérisé en ce que le logement comporte des moyens d'accrochage par encliquetage.

La présente invention a également pour objet un dispositif de retenue caractérisé en ce que l'élément en saillie est une extrémité d'une goupille de fixation d'une chape de la première partie de la tige de commande.

La présente invention a également pour objet un dispositif de retenue caractérisé en ce qu'il comporte une surface d'appui venant en contact d'une extrémité d'un deuxième bras du boîtier de pédalier du pédalier réalisant le deuxième appui.

La présente invention a également pour objet un dispositif de retenue caractérisé en ce qu'il comporte des moyens de maintien axial du dispositif par rapport à la chape du pédalier.

La présente invention a également pour objet un dispositif de retenue caractérisé en ce que lesdits moyens de maintien axial comportent un premier et un deuxième rebords formant un glissière et bordant la surface d'appui.

La présente invention a également pour objet un dispositif de retenue caractérisé en qu'il comporte un troisième appui formé par un doigt sensiblement perpendiculaire à la surface d'appui et venant r eposé c ontre u ne extrémité d'une goupille e n saillie de la chape, la dite goupille formant un axe de rotation de la pédale par rapport à la chape.

La présente invention a également pour objet un dispositif de retenue caractérisé en ce que des moyens de maintien axial supplémentaire sont prévus, comportant une patte repliée en forme de crochet disposé sensiblement à une extrémité opposée dans le sens de déplacement de la pédale, à l'extrémité du moyen de retenue comportant le logement.

La présente invention a également pour objet un dispositif de retenue caractérisé en ce qu'il comporte un moyen d'orientation de la première extrémité de la tige de commande dans une orientation déterminée comportant un doigt prolongeant le logement et formant appui pour la chape de la tige de commande.

La présente invention a également pour objet un dispositif de retenue caractérisé en ce qu'il comporte un corps muni à une première extrémité d'une patte destiné à venir pincer l'âme de la pédale et à une deuxième extrémité un élément destiné à être monté dans une lumière pratiquée dans un premier bras de la chape du pédalier, ledit élément étant de forme complémentaire à ladite lumière et en ce que ledit élément est en saillie d'un disque de diamètre supérieur aux dimensions transversales de l'élément destiné à venir en appui sur le pourtour de la lumière.

La présente invention a également pour objet un dispositif de retenue caractérisé en ce qu'il comporte un moyen d'orientation de la première partie de la tige de commande comportant un bras s'étendant sensiblement radialement du corps et muni à une extrémité éloignée du corps d'une corniche d'appui de la première partie de la tige de commande.

La présente invention a également pour objet un dispositif de retenue caractérisé en ce qu'il comporte un premier élément solidaire d'un support d'un interrupteur d'un dispositif d'allumage des feux de stop, ledit support étant fixé au pédalier et d'un contacteur dudit dispositif d'allumage des feux de stop, ledit contacteur étant fixé sur l'âme de la pédale, ledit support étant formé par une platine percée d'un orifice de réception dudit interrupteur perpendiculaire à l'âme de ladite pédale, et ledit contacteur étant formé par surface perpendiculaire à l'âme de la pédale et sensiblement parallèle audit support lorsque la pédale est en position repos, ledit premier élément maintenant ladite pédale dans une position déterminée et un deuxième élément interposé entre la chape de ladite tige de commande et l'âme de la pédale maintenant la première partie de la tige de commande dans une orientation déterminée.

La présente invention a également pour objet un dispositif de retenue caractérisé en ce que le premier élément a sensiblement la forme d'un U comportant une première et une deuxième branche destinées à être montées de part et d'autre de la platine, et séparées par une fente de dimension transversale sensiblement égale à la dimension transversale de la platine, lesdits première et deuxième branches étant raccordés par un fond disposé lorsque ledit dispositif est monté sur le véhicule en dessous selon un axe vertical de la platine et en ce qu'il comporte une patte d'accrochage de la deuxième branche du premier élément au contacteur.

La présente invention a également pour objet un dispositif de retenue caractérisé en ce que la patte d'accrochage est sécable.

La présente invention a également pour objet un dispositif de retenue caractérisé en ce qu'il comporte un volet rabattable sur une face extérieure éloignée de l'âme du premier élément, ledit volet étant muni d'une rainure en saillie du volet et venant s'interposer entre la platine et le fond du premier élément afin de limiter déplacement des première et deuxième branches du premier élément par rapport à la platine.

La présente invention a également pour objet un dispositif de retenue selon la revendication précédente caractérisé en ce que le volet rabattable est venu de matière avec la première branche.

La présente invention a également pour objet un dispositif de retenue caractérisé en ce que le deuxième élément est un pion en forme de bec de canard apte à s'encliqueter sur la chape de la première partie de la tige de commande.

La présente invention a également pour objet un dispositif de retenue caractérisé en ce que le premier élément et le deuxième éléments sont reliés par un cordon.

La présente invention a également pour objet un dispositif de retenue caractérisé en ce qu'il est réalisé par injection de matériau plastique dans un moule.

La présente invention a également pour objet un dispositif de retenue caractérisé en ce que ledit premier élément comporte une platine sensiblement en forme de V, munie d'une première et d'une deuxième branches, lesdits première et deuxième branches étant raccordés par un fond disposé lorsque ledit dispositif est monté sur le véhicule en dessous selon un axe vertical de la platine, ladite première branche comportant un moyen élastique d'accrochage au support de l'interrupteur, en ce qu'une gorge est prévue entre les première et deuxième branches pour recevoir une extrémité du contacteur et en ce que le deuxième élément est formé par une extrémité de la deuxième branche comportant un surface d'appui pour la chape de la tige de commande.

La présente invention a également pour objet un dispositif de retenue caractérisé en ce que la platine comporte une troisième branche sensiblement perpendiculaire au première et deuxième branches , ladite troisième branche étant munie en appui sur un élément en saillie du pédalier et apte à quitter son appui lorsque le dispositif est emporté par la pédale.

La présente invention a également pour objet un dispositif de retenue caractérisé en ce que le moyen élastique est formé par un brin rappelé en contact de la première branche par un ressort type «pince à linge».

La présente invention sera mieux comprise à l'aide de la description qui va suivre et des dessins en annexe sur lesquels l'avant et l'arrière sont respectivement la partie gauche et la partie droite des figures et sur lesquels :
- La figure 1 est une vue de trois quart arrière d'un pédalier de véhicule automobile de type connu ;
- Les figures 2b, 2c et 2d sont des vues de côté de trois étapes d'un procédé de montage selon la présente invention d'un dispositif de freinage dans un véhicule automobile comportant un premier mode de réalisation d'un dispositif de retenue selon la présente invention ;
- La figure 3 est une vue de trois quart arrière d'un d euxième mode de réalisation d'un dispositif de retenue selon la présente invention ;
- La figure 4 est une vue de trois quart avant du dispositif de retenue de la figure 3 ;
- La figure 5 est une vue de trois quart arrière d'un troisième mode de réalisation d'un dispositif de retenue selon la présente invention ;
- La figure 6 est une vue d'un détail de la figure 5 ;
- Les figure 6a, 6bet 6c sont des vues de côté du dispositif de la figure 5 dans une première et une deuxième étape de montage du dispositif de retenue sur un pédalier ;
- La figure 6d est une vue de côté du dispositif de la figure 5 après montage du dispositif de commande sur la pédale et vérification du montage;
- La figure 7a est une vue trois quart avant d'un quatrième mode de réalisation d'un dispositif de retenue selon la présente invention ;
- Les figures 7b à 7d sont des vues de côté des étapes d'un procédé de montage selon la présente invention d'un dispositif de freinage dans un véhicule automobile comportant le dispositif de la figure 7a.
- La figure 8 est une vue de trois quart avant d'un exemple de dispositif de liaison de la première et de la deuxième partie de la tige de commande de type connu ;
- La figure 9 est une vue de trois quart avant d'un exemple d'agencement pour la fixation du servomoteur au tablier.

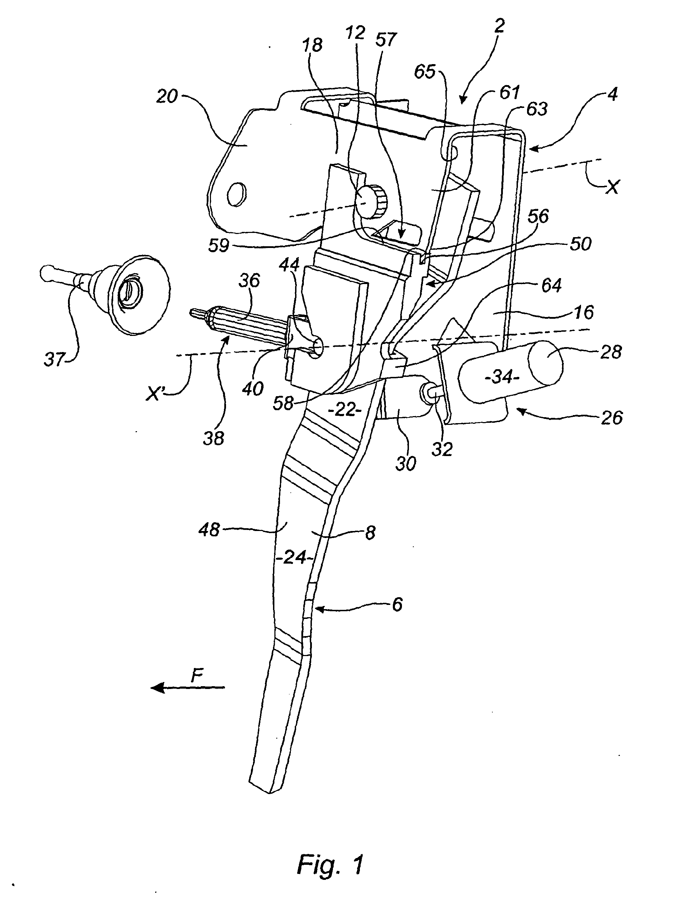

Sur la figure 1, on peut voir un pédalier 2 de véhicule automobile, comportant un boîtier de pédalier 4 de fixation à un tablier (non représenté) à laquelle est monté en rotation autour d'un axe X une pédale de frein 6. La pédale de frein 6 comporte une âme 8 comportant à une première extrémité (non visible) un orifice de passage d'une goupille 12 formant axe de rotation de la pédale par rapport au boîtier de pédalier 4 et à une deuxième extrémité un élément d'application (non représenté) d'un effort de freinage par le conducteur automobile dans le sens de la flèche F.
Dans l'exemple représenté, le boîtier de pédalier 4 a sensiblement une section selon l'axe X en U munie d'un premier bras 16 de plus grande longueur et un deuxième bras 18 de plus petite longueur.

On entend par face intérieure une faces sensiblement parallèles au premier bras 16 et en regard de celui-ci, et par face extérieure une face sensiblement parallèles au premier bras 16 mais qui n'est pas en regard du premier bras 16.

Le boîtier de pédalier est fixée au tablier, par l'intermédiaire de deux pattes 20 perpendiculaires aux premier et deuxième bras et venue de matière respectivement avec l'un et l'autre bras. Un orifice 15 (non représenté) est pratiqué dans le tablier pour permettre le passage d'au moins une tige de commande d'un dispositif de freinage. La fixation du boîtier de pédalier au tablier s'effectue par exemple par un système vis-écrous.

Dans l'exemple représenté, la pédale de frein comporte une première partie 22 proche du boîtier de p édalier 4 contenue dans un premier plan orthogonal à l'axe X, et une deuxième partie 24 éloignée du boîtier de pédalier 4 et contenue dans un deuxième plan orthogonal à l'axe X, la première partie 22 étant raccordée à la deuxième partie 24 par une troisième partie inclinée par rapport à l'axe X

De manière avantageuse, le pédalier comporte un dispositif d'allumage des feux de stop 26 comportant un interrupteur 28 solidaire du boîtier de pédalier et un contacteur 30 solidaire de la pédale de frein et sensiblement perpendiculaire à la première partie 22 de la pédale et à la direction de déplacement de la pédale

L'interrupteur 28 comporte une tige 32 montée à coulissement dans un corps 34 et venant au repos en appui contre le contacteur 30. L'actionnement de la pédale de frein est détectée par un déplacement déterminée de la tige 34 par rapport au corps 34, du fait de l'éloignement du contacteur et de l'action d'un ressort (non visible)).

Dans l'exemple représenté, la tige de commande est composite et comporte une première partie 36 solidaire en rotation de l'âme 8 autour d'une axe X' parallèle à l'axe X. La première partie 36 de la tige de commande 38 comporte à une première extrémité une chape 40 de fixation munie d'orifices de passage 42 d'une goupille 44 de longueur axiale supérieure à la dimension axiale de la chape 40 de manière à ce qu'une extrémité 46 de la goupille 44 face saillie d'une première face 48 de l'âme 8 de la pédale 6. Une deuxième partie 37 de la tige de commande 38 est montée dans un servomoteur d'assistance pneumatique au freinage (non représenté). La première et la deuxième parties 36,37 comportent respectivement des moyens d'accrochage mutuel, par exemple un moyen d'encliquetage à épingle.

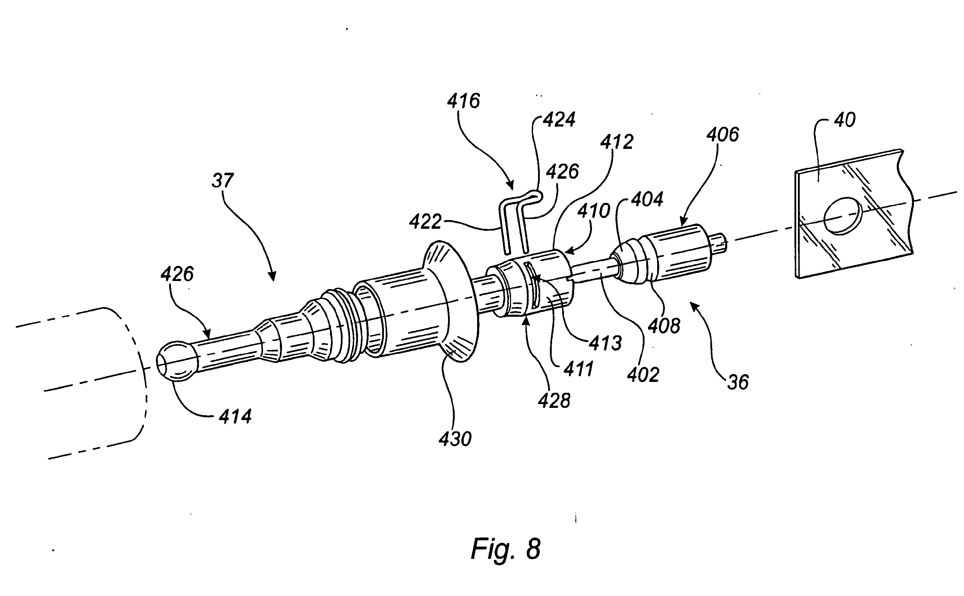

La figure 8 est une vue de trois quart d'un dispositif connu de l'état de la technique de liaison axial d'un première partie et d'une deuxième partie d'une tige de commande

Sur la figures 8, on peut voir la première partie 36 et de la deuxième partie 37 de la tige de commande 38 reliées axialement par un dispositif de blocage élastique, tel que décrit dans la demande de brevet FR 01/08306.

Le dispositif de blocage comporte un élément mâle formé par la première partie 36 de la tige de commande 38 et un élément femelle formée par la deuxième partie de la tige de commande 38. La première partie 36 comporte un corps 406 de forme cylindrique munie à une première extrémité la chape 40 et à une deuxième extrémité longitudinale opposée à la première extrémité un téton 402 formé à sa base par une portion tronconique 404, la petite base de la portion tronconique étant orienté du côté du téton 402. Le corps 406 comporte également une gorge annulaire 408 pratiqué longitudinalement en arrière de la portion tronconique 404.

La deuxième partie 37 comporte un logement 410 de réception du téton 402 formé dans une première extrémité 412 longitudinale de la deuxième partie 37 opposée à la deuxième extrémité longitudinale 414 montée dans le dispositif de commande.

Le logement 410 comporte une paroi cylindrique 411 percée de deux lumière 413 parallèles l'une à l'autre, pratiquées sensiblement orthogonalement à l'axe de la tige de commande pour recevoir un moyen élastique 416 destiné à pénétrer dans la gorge 408 de la première partie 36 de la tige de commande. Le moyen élastique 416 comporte une épingle 418 munie d'un premier et d'un deuxièmes brins 420,422 parallèles raccordés par un coude 424, le coude étant replié de manière à former un angle droit avec les brins 420,422. Le coude vient en appui de la paroi du logement 410.

De manière avantageuse, le deuxième partie 37 comporte un première élément longitudinal 426 muni de la deuxième extrémité longitudinale 414 monté dans le servomoteur et un deuxième élément 428 longitudinal dans lequel est pratiqué le logement 410, le deuxième élément 428 étant fixé au premier élément 426. Le premier élément 426 comporte une cavité (non visible) à une extrémité longitudinale opposée à la première extrémité 414, dans laquelle est fixé le deuxième élément 428. Par exemple, la cavité 430 est munie d'un taraudage et la paroi extérieure du deuxième élément 428 est munie d'un filet apte à coopérer avec le taraudage de la cavité 430.

La cavité est bordée d'une collerette conique 430 orientée vers l'arrière, formant entonnoir de manière à faciliter le montage de la première partie dans la deuxième partie.

Le procédé d'accrochage de la première partie dans la deuxième partie est le suivant :
- La deuxième partie est mis en regard de la première partie 36 du téton 402 ;
- La deuxième partie est rapprochée axialement du téton 402, de manière à ce que la partie tronconique écarte les premier et deuxième brins 420,422 de l'épingle, et à ce que les premier et deuxième brins 420,422 se resserrent dans la gorge 402.

De manière avantageuse, la gorge 408 a une section transversale trapézoïdale assurant un rattrapage de jeu automatique entre la première et le deuxième parties 36,37.

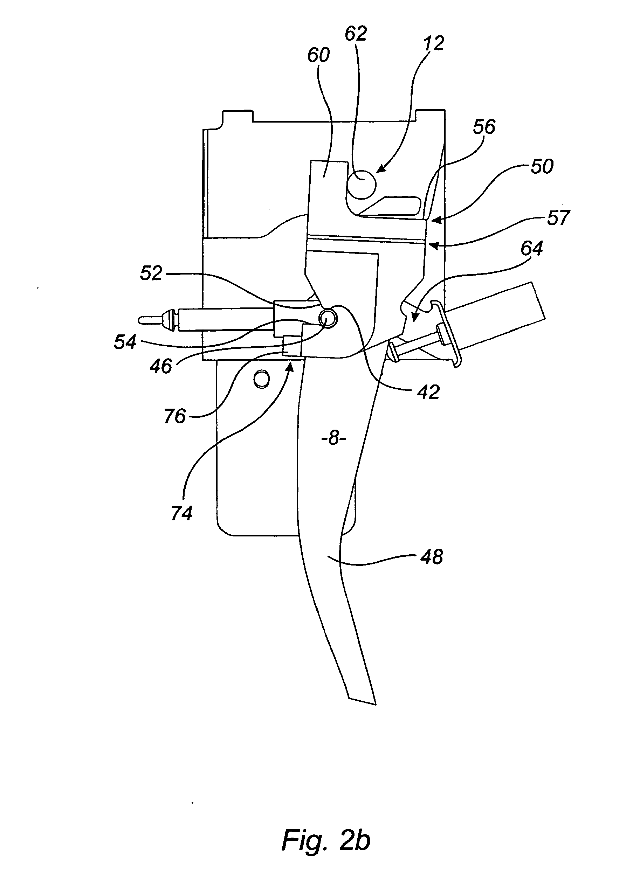

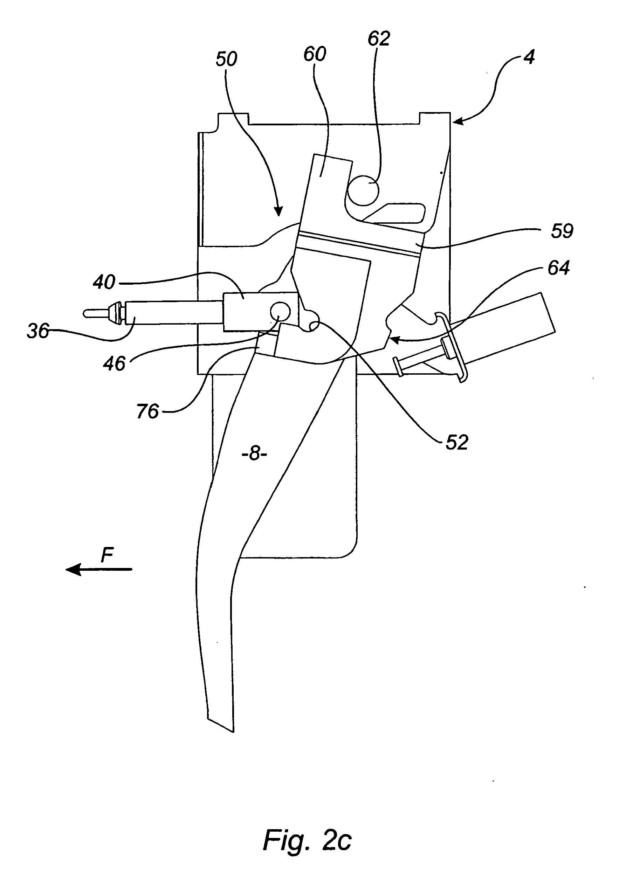

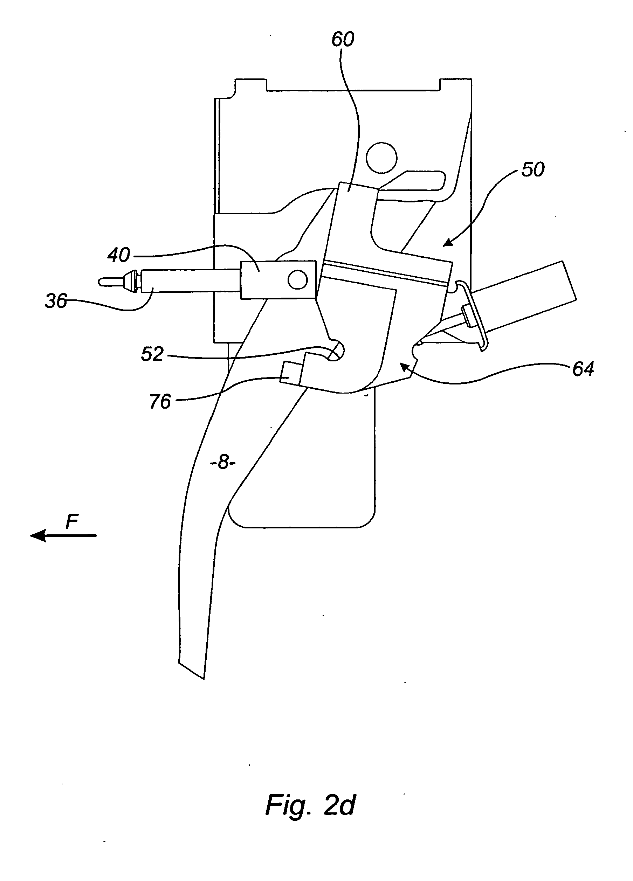

Sur les figures 1, 2b à 2c, le pédalier décrit précédemment comporte également un dispositif de retenue 50 de la pédale 6 dans une position déterminée et de maintien de la première partie 36 de la tige de commande 38 dans une orientation déterminée.

On entend par position déterminée une position de recul vers l'arrière de la pédale limitée, dans l'exemple représentée il s'agit d'une position correspondant à environ un tiers de la course totale de la pédale de frein, on évite ainsi toute interférence avec l'interrupteur 28 du dispositif d'allumage des feux de stop. On entend par orientation déterminée de la première partie de la tige de commande, une direction de la première partie de la tige de commande qui soit sensiblement coaxial à l'axe de la tige de commande après le montage du dispositif de commande.

Le dispositif de retenue est montée d'une part sur l'âme 8 de la pédale de frein et d'autre part sur le boîtier de pédalier du pédalier de manière à pouvoir immobiliser l'âme de la pédale par rapport au pédalier.
Le dispositif de retenue 50, que nous appellerons cale dans la suite de l'exposé, est monté contre la première face 48 de l'âme de la pédale éloignée du premier bras 16 de la chape du pédalier.

La cale 50 vient d'une part en appui sur l'âme de la pédale et d'autre part sur la chape du pédalier. La cale 50 comporte un logement 52, de réception de l'extrémité 46 de la goupille 44 solidaire de l'âme de la pédale, avantageusement le logement 52 comporte un redent 54 de retenue de l'extrémité 46 ou une forme en bec de manière à permettre une retenue de l'extrémité 46 par encliquetage.

D'autre part le dispositif de retenue 50 comporte une surface d'appui 56 contre une extrémité inférieure 58 du deuxième bras 18 de la chape du pédalier. Par conséquent l'âme de la pédale est maintenu dans une position déterminée P par la cale 50 par réaction de l'appui sur l'extrémité 46 de la goupille 44 et l'appui sur l'extrémité inférieure 58 de la chape du pédalier sur la cale 50.

Dans l'exemple représenté, la surface d'appui 56 est formée par une glissière 57 de dimension selon l'axe X sensiblement égale à la dimension axial du bras 18 du pédalier assurant ainsi également un maintien axial de la cale par rapport au pédalier. La glissière est délimitée par un premier rebord 59 en regard d'une face extérieure 61 du bras 18 et par un deuxième rebord 63 en regard d'une face intérieure 65 du bras 18.

De manière avantageuse, on prévoit un troisième appui de la cale 50 contre un élément solidaire de la chape du pédalier et formant un appui latéral garantissant une position parfaite de la cale 50. Le troisième appui est réalisé au moyen d'un doigt 60 s'étendant sensiblement perpendiculairement à la glissière venant en appui en position montée contre une extrémité 62 de la goupille 12 de la pédale de frein faisant saillie de la chape du pédalier. Le doigt 60 est avantageusement venu de matière avec le premier rebord 59 de la glissière.

De manière encore plus avantageuse, la chape comporte un moyen de maintien 64 axial supplémentaire par rapport à l'âme de pédale formé par une patte repliée en forme de crochet. La patte 64 s'étend selon l'axe X vers le premier bras 16 pour venir s'accrocher sur l'âme de la pédale. La patte 64 est formée à une extrémité de la cale 50 opposée selon la direction de déplacement de la pédale, à une extrémité dans laquelle est formée le logement 52.

La cale comporte une face intérieure en regard de l'âme de la pédale avantageusement de forme complémentaire à l'âme de la pédale afin d'améliorer la coopération entre la cale et la pédale. Dans l'exemple représenté, la face intérieure de la cale comporte une première et une deuxième parties contenue respectivement dans un premier et dans un deuxième plans déclarée axialement et raccordé par une troisième partie inclinée.

La cale 50 comporte également un moyen d'orientation 74 de la première partie 36 de la tige de commande 38 dans une orientation déterminée O afin qu'elle soit sensiblement dans la position qu'elle aura après montage du dispositif de freinage. Le moyen d'orientation comporte un doigt 76 en prolongement du logement 52 orienté vers l'avant et formant un appui pour la chape 40 de la tige de commande.

Le montage de la cale 50 sur le pédalier s'effectue en disposant la cale dans la partie inférieure de l'âme et en la faisant remontée en direction de la chape du pédalier avec un léger mouvement de rotation autour d'un axe parallèle à l'axe X de manière à ce que l'extrémité 46 de la goupille 44 pénètre le logement 52 et à ce que l'extrémité 58 du bras 18 pénètre dans la glissière 57.

La cale 50 est réalisée de manière avantageuse en matière plastique par injection, cependant il est envisageable de la réaliser par exemple en alliage d'aluminium moulé ou usiné.

Nous allons maintenant d'écrire le procédé de montage d'un dispositif de freinage comportant un servomoteur d'assistance pneumatique au freinage muni de la deuxième partie 37 de la tige de commande 38 sur un véhicule automobile muni d'un pédalier équipé de la cale 50, la pédale de frein est alors dans la position déterminée P

Le procédé de montage comporte entre autres les étapes suivantes consistant en :
- La mise en place du servomoteur dans le compartiment moteur en regard de l'orifice 15,
- le déplacement du servomoteur de manière à rapprocher la deuxième partie 37 de la tige de commande de la première partie 36 de la tige de commande et l'application d'un effort suffisant pour permettre l'accrochage mutuel de la première et de la deuxième parties 36,37 de la tige de commande 38 ;(figure 1b)
- La vérification de l'accrochage des première et deuxième parties 36,37 en déplaçant en éloignement de l'habitacle le dispositif de freinage, si la pédale de frein est déplacée en rotation en direction du compartiment moteur, la cale 50 est également entraînée par l'intermédiaire de la liaison entre l'extrémité 46 de la goupille 44 et le logement 54 de la cale 50, cependant le mouvement de rotation de la pédale par rapport à la chape du pédalier repousse la surface d'appui 56, provoquant le désengagement de l'extrémité 46 de la goupille 44 du logement 44 et l'ablation de la cale 50 par gravité. La cale tombe alors dans le fond de l'habitacle. Le déplacement du dispositif de freinage en direction de l'habitacle et la fixation du dispositif de freinage sur le tablier ou sur un élément rapporté sur le tablier par exemple par un agencement à baïonnette sont alors possibles.

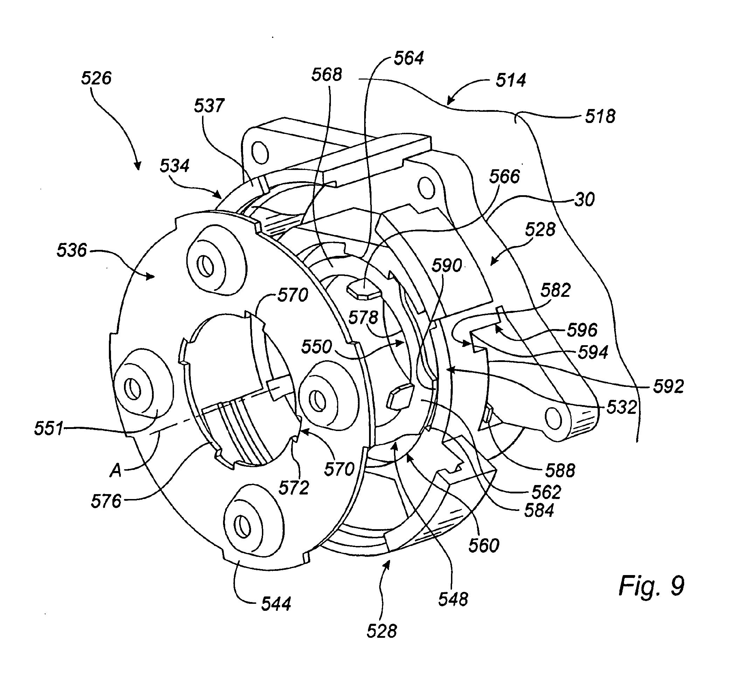

Sur la figure 9, on peut voir un exemple d'agencement pour la fixation du servomoteur au tablier du véhicule automobile, ledit tablier comportant des moyens d'accrochage à baïonnette. Les moyens d'accrochage sont interposés entre le servomoteur et le tablier 514 et comportent une plaque fixée sur un face du servomoteur destinée à être en regard du tablier et une platine fixée sur le tablier. Les moyens d'accrochage comportent également des moyens élastiques pré-comprimés destinées à solliciter l'assemblage pour en assurer la bonne tenue, le moyens élastiques sont montés dans la platine 528. Les moyens élastiques comportent un ressort hélicoïdal reçu dans un alésage 548 de la platine 528 et comportent aussi une coupelle 550 d'appui, qui est d'un diamètre correspondant sensiblement à celui dudit alésage 548, et qui est interposée entre le ressort et la plaque de fixation 536 du servomoteur 512 pour comprimer ou décomprimer axialement le ressort hélicoïdal (non visible).

La platine et la plaque comportent respectivement au moins deux premiers moyens d'immobilisation axiale 534 et deux seconds moyens d'immobilisation axiale 544. Les premiers moyens 534 d'immobilisation axiale sont constitués d'au moins de deux crochets534 qui s'étendent à partir d'une face avant 532 de la platine 528, qui sont répartis de manière angulaire autour d'une direction axiale "A" suivant un diamètre déterminé supérieur à celui de la plaque de fixation, et dont les parties actives 537 sont tournées vers la direction axiale "A". La partie active 537 de chaque crochet 534 est notamment constituée d'une plaque qui, à partir du corps d'orientation sensiblement parallèle à la direction axiale "A" de chaque crochet 534, s'étend radialement vers la direction axiale "A".
Par ailleurs, la plaque 536 de fixation comporte au moins deux tenons radiaux 544 formant les seconds moyens d'immobilisation axiale, qui s'étendent radialement à partir de la plaque 536 de fixation suivant le même diamètre déterminé que celui des crochets 534, qui sont répartis angulairement autour de la direction axiale "A", et dont chacun, dans la position d'introduction du servomoteur, est destiné à être inséré angulairement entre deux crochets 534 consécutifs puis, lorsque la plaque 536 de fixation est pivotée d'un angle "α" déterminé autour de la direction axiale "A" pour atteindre la position de verrouillage du servomoteur, est destiné à être retenu axialement par la partie active 537 d'un crochet 534 associé.

La plaque 536 de fixation comporte au moins deux bossages 551 de fixation, qui sont répartis angulairement de manière régulière sur un diamètre "d" maximal qui est inférieur au diamètre "D" minimal selon lequel sont réparties les parties actives 537 des crochets 534, qui sont d'une épaisseur "b" supérieure à l'épaisseur "c" des parties actives 537 des crochets 534, et qui sont destinés, à être traversés par des moyens axiaux de fixation du servomoteur sur la plaque 536, notamment des goujons (non représentés) permettant la fixation du servomoteur par des écrous (non représentés) sur la face arrière 552 de la plaque 536 de fixation.

La coupelle 550 comportent des seconds moyens 560 de montage à baïonnette commandés par les premiers moyens 526 de montage à baïonnette, de manière à permettre un montage du servomoteur en une seule opération effectuée par un seul opérateur.

Les seconds moyens 560 de montage à baïonnette comportent des pattes radiales 562 de la coupelle 550 d'appui, qui sont susceptibles, dans une position de maintien en compression, d'être retenues axialement entre une face d'épaulement 558 et des ergots radiaux 564 de la platine 528 qui s'étendent sensiblement dans le plan de sa face avant pour maintenir le ressort comprimé, et qui sont susceptibles, dans une position de décompression, de s'échapper desdits ergots 564 pour libérer le ressort hélicoïdal.
A cet effet, des moyens d'entraînement sont interposés entre la plaque 536 de fixation et la coupelle 550 pour accoupler les premiers moyens 526 et les seconds moyens 560 de montage à baïonnette, en associant la position d'introduction du servomoteur à la position de maintien en compression des moyens élastiques et en associant la position de verrouillage du servomoteur ou une position de montage des moyens élastiques à la position de décompression des moyens élastiques.

Les moyens d'entraînement comportent au moins deux doigts 566 axiaux, répartis angulairement de manière régulière, qui s'étendent vers l'avant à partir de la face avant 568 de la coupelle 550 d'appui et qui sont destinés à être reçus dans des encoches 570 pratiquées dans la plaque 536 de fixation. Un bord 572 de chaque encoche 570 est destiné à pousser le doigt 566 correspondant de la coupelle 550 d'appui pour provoquer la rotation de la coupelle 550 entre la position d'introduction du servomoteur associée à la position de maintien en compression des moyens élastiques et la position de verrouillage du servomoteur associée à la position de décompression des moyens élastiques.
L'agencement comporte aussi avantageusement des moyens 582 de butée axiale destinés à retenir la coupelle 550 d'appui en position de décompression du ressort hélicoïdal, pour éviter que la coupelle 550 ne s'échappe de l'alésage 548 en cas de déverrouillage intempestif des seconds moyens 560 de montage à baïonnette.

Plus particulièrement, ces moyens 582 de butée de la coupelle 550 d'appui comportent au moins deux bras 584 axiaux, qui s'étendent à partir d'une face arrière de la coupelle d'appui, qui entourent le ressort hélicoïdal et qui sont reçus dans l'alésage 548 par l'intermédiaire de troisièmes moyens de montage à baïonnette de manière à être mobiles entre :
- une position angulaire de montage, dans laquelle une extrémité 588 recourbée de chaque bras 584 est insérée dans une rainure axiale 590 qui s'étend vers l'arrière dans l'alésage 548 à partir de la face avant 532 de la platine 528 de réception,
- une position angulaire de repos, qui est associée à la position de maintien en compression du ressort hélicoïdal et dans laquelle la rotation de la coupelle 550 conduit l'extrémité 588 recourbée de chaque bras 584 à être reçue avec jeu axial dans une rainure 592 périphérique arrière formée dans l'alésage 548 et communiquant avec la rainure axiale 590,
- une position angulaire de butée, intermédiaire entre la position de montage et la position de repos et associée, à la position de décompression du ressort hélicoïdal, dans laquelle, après une rotation en sens inverse de la coupelle 550, l'extrémité recourbée 588 de chaque bras 584 est reçue en butée contre une face d'extrémité 594 avant d'une encoche 596 qui s'étend axialement vers l'avant à partir de la rainure 592 périphérique arrière et dont la longueur correspond sensiblement à l'allongement du ressort hélicoïdal entre sa position de maintien en compression et sa position de décompression.
Ainsi, les bras 584 de la coupelle 550 permettent la retenue partielle du ressort comprimé en cas de mauvaise manipulation avant le montage définitif du servomoteur 5.

La plaque 536 de fixation et la coupelle 50 d'appui comportent chacune un perçage central 576, 578 d'un diamètre au plus égal au diamètre intérieur du ressort hélicoïdal pour permettre le passage d'une queue du servomoteur, queue recevant notamment en coulissement une tige d'actionnement du servomoteur .

Dans cette configuration, le montage du servomoteur peut être effectué selon le procédé de montage suivant.
Au cours de deux étapes indépendantes, on assemble d'une part le servomoteur à la plaque 536 de fixation, et d'autre part on monte le ressort et la coupelle d'appui 550 dans la platine 528 de réception.
Puis, dans une é tape suivante, on présente le servomoteur 512 muni de la plaque de fixation 536 devant la platine 528 de réception, en agençant angulairement les seconds moyens 544 d'immobilisation axiale entre les premiers moyens 534 d'immobilisation axiale.
Puis, dans une étape suivante, on avance la plaque 536 de fixation au contact de la platine 528 de réception.
Enfin dans une dernière étape, on fait pivoter le servomoteur 512 et la plaque de fixation 536 de l'angle "α" déterminé pour verrouiller la plaque 536 de fixation et pour décompresser les moyens élastiques .

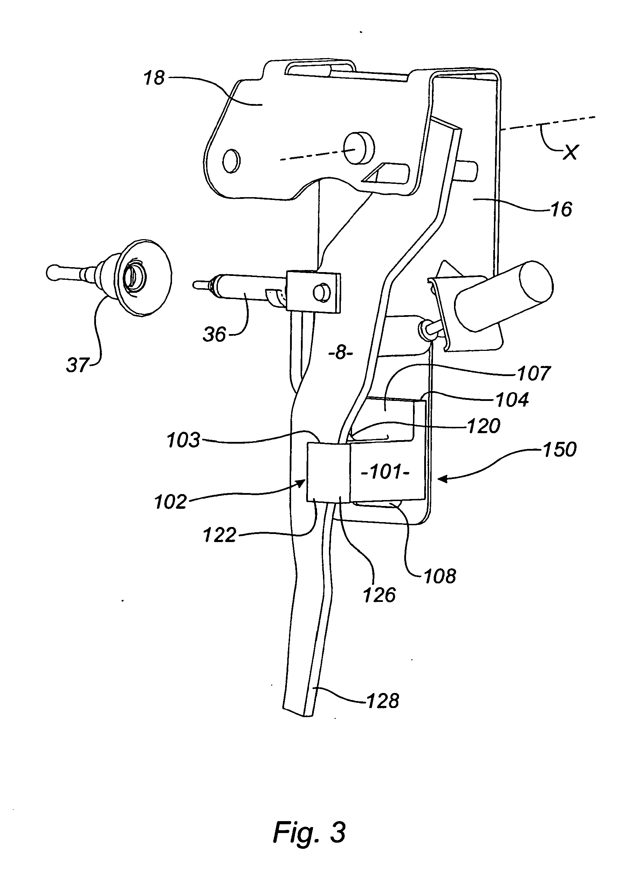

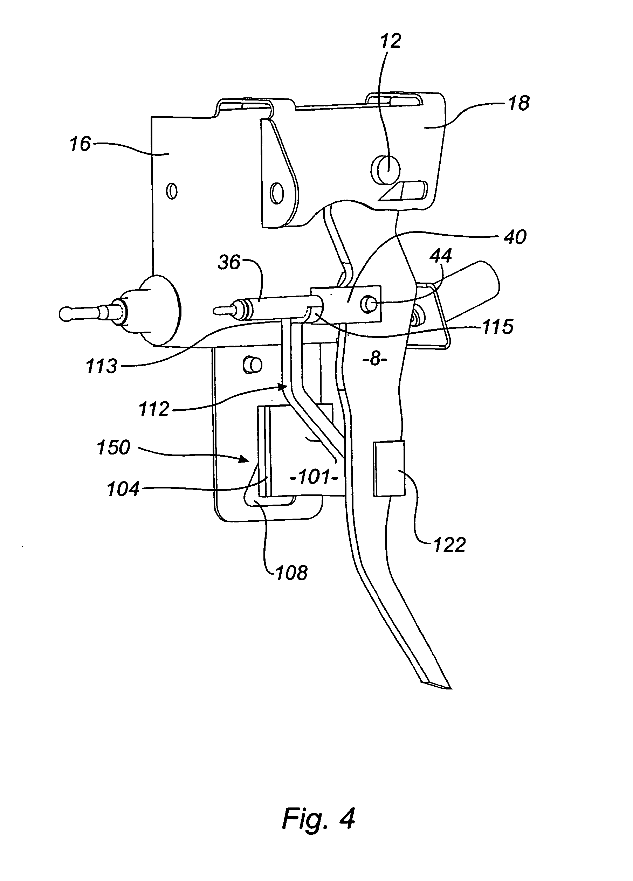

Sur les figures 3 et 4, on peut voir un deuxième mode de réalisation d'un dispositif de retenue 150 selon la présente invention coopérant avec le premier bras 16 de la chape de l'étrier.

La cale 150 comporte un corps 101 d'axe parallèle à l'axe X et muni selon l'axe X à une première extrémité un moyen d'accrochage 102 à la pédale et deuxième extrémité un deuxième moyen d'appui 104 à la chape du pédalier.
Le premier moyen 102 comporte une pince 103 munies d'une première patte intérieure 120 du côté du corps 101 et perpendiculaire à l'axe X et une deuxième patte extérieure 122 parallèle à la première patte. La première et la deuxième pattes 120,122 sont raccordées par un pontet 126 destiné à venir en appui d'une tranche arrière 128 raccordant la face intérieure et la face extérieure de l'âme 8.

La pince 103 est avantageusement venue de matière avec le corps 101. On peut prévoir que la première patte 120 soit formé par la première extrémité axiale du corps 101.

La deuxième extrémité du corps 101 est formée dans l'exemple représenté par plaque 107 rectangulaire de laquelle vient en saillie un élément 110 (non visible) de forme sensiblement complémentaire à celle d'une lumière 108 pratiquée dans la partie inférieure du bras 16 de la chape du tablier, de manière à ce que l'élément complémentaire s'emboîte dans la lumière 108.

La dimension axial L séparant la face intérieure de l'âme de la face du bras 16 en regard de la face intérieure de l'âme est sensiblement égale à la distance L' séparant la première patte 120 de la face du disque dont l'élément complémentaire est en saillie.

La lumière 108 est prévue de manière connue pour recevoir par exemple dans sa partie inférieure un élément électronique pour la pédale d'accélérateur. Mais il est bien entendu qu'il est envisageable de prévoir une lumière exclusivement réservé au montage de l'élément complémentaire.

La cale 150 est alors maintenue en réaction entre l'âme de la pédale et le premier bras de plus grande longueur 16 de la chape.

La cale 150 comporte également un moyen 112 pour orienter la première partie de la tige de commande. Dans l'exemple représenté, le moyen 112 comporte un bras s'étendant du corps 101 de manière sensiblement radiale et muni une extrémité 113 éloignée du corps 101 d'un doigt 115 formant appui pour la première partie 36 de la tige de commande 38.

La cale est obtenue avantageusement par injection de matière plastique dans un moule, mais une réalisation par usinage ou moulage par exemple d'une alliage d'aluminium est envisageable.

Le procédé de montage du dispositif de freinage sur le véhicule automobile muni d'un pédalier équipé de la cale 150 est sensiblement le même que celui décrit dans le cadre du premier mode de réalisation du dispositif de maintien.

La cale selon la présente invention a pour avantage d'être de montage simple et rapide et réutilisable pour des montages suivants.

Les premier et deuxième modes de réalisations ont pour avantage que la chute du dispositif de retenue provoque un bruit permettant de détecter facilement si l'accrochage est effectif, la présence de la cale sur le fond de l'habitacle permet également rapidement de repérer si l'accrochage a eu lieu.

Il est bien entendu que l'on peut prévoir que le dispositif de retenue ne tombe pas sur le fond de l'habitacle mais qu'il comporte des moyens le retenant au pédalier ou au tablier dans sa deuxième position.

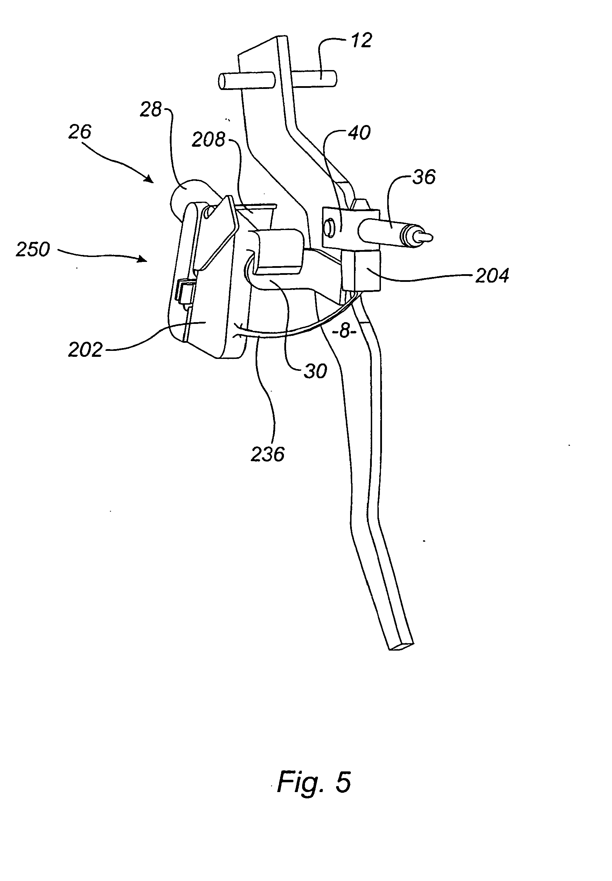

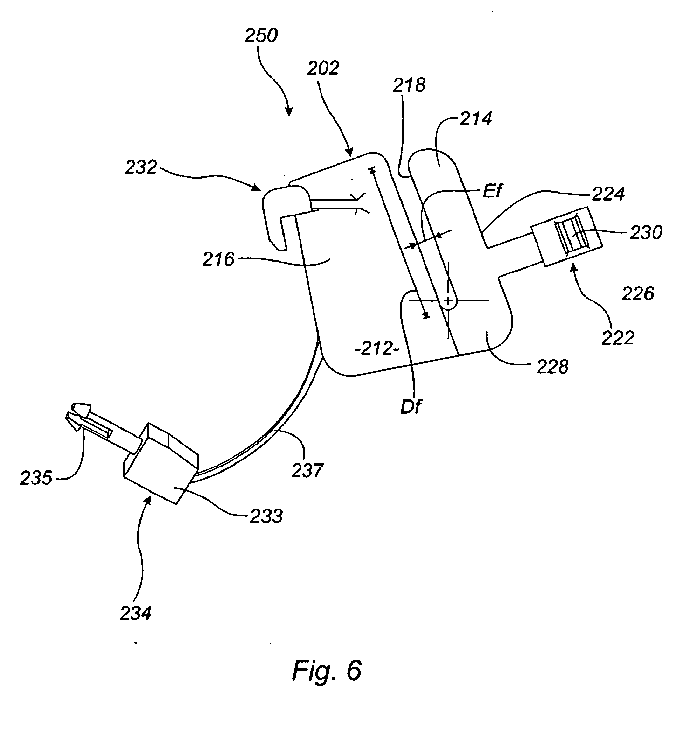

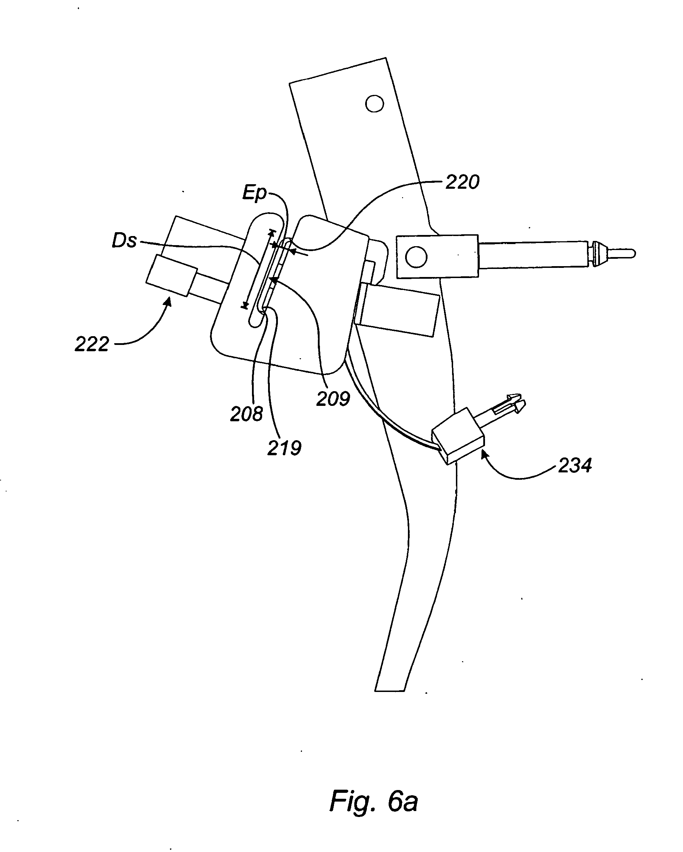

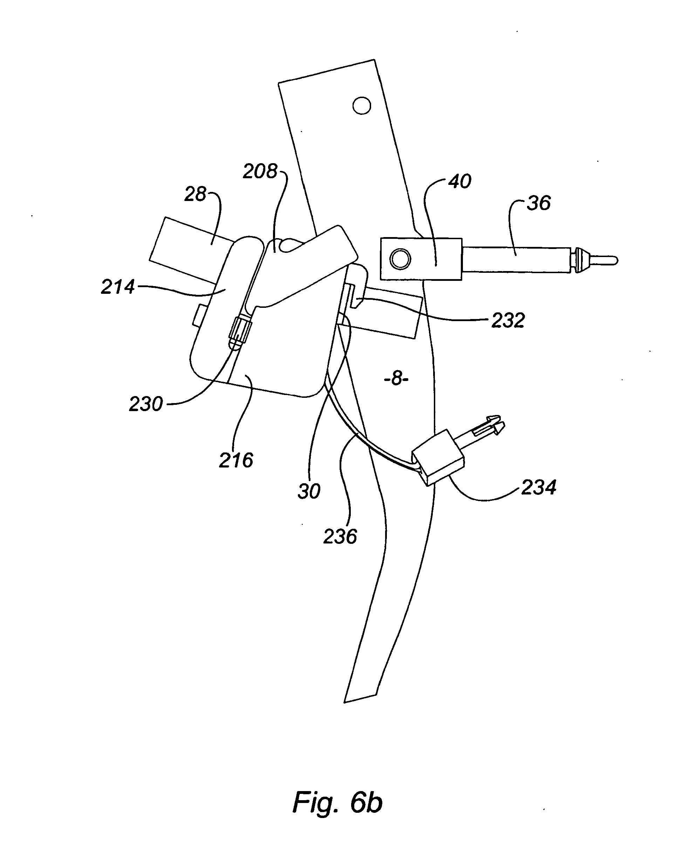

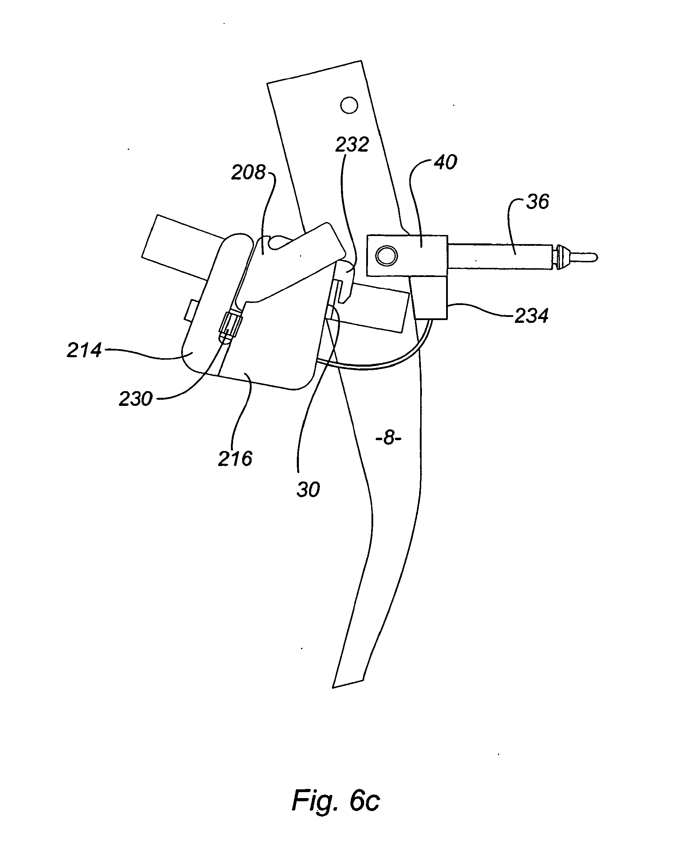

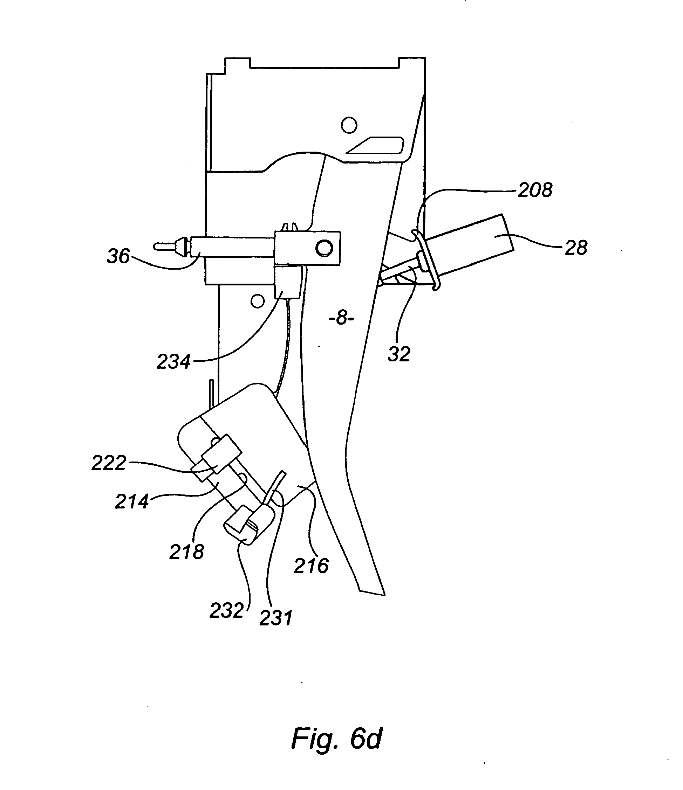

Sur les figures 5, 6, 6a à 6d on peut voir un troisième mode de réalisation d'un dispositif de retenue provisoire 250 selon la présente invention comportant un premier élément 202 immobilisant la pédale de frein dans une position P déterminée et un deuxième élément 204 maintenant la première partie de la tige de commande dans une orientation O déterminée, le premier et le deuxième éléments 202,204 étant reliés par un élément flexible.

Le pédalier comporte un dispositif d'allumage des feux de stop 26 formés par un interrupteur 28 monté fixe par rapport à un pédalier et un contacteur 30 monté fixe par rapport à la pédale de frein. L'interrupteur comporte une tige 32 (non visible) montée coulissante dans un corps 34 et en application contre le contacteur 30, lorsque la pédale est au repos.

Le corps 34 est monté par exemple par encliquetage sur le boîtier du pédalier ou par un montage type baïonnette dans un orifice pratiqué dans une platine de tôle de section transversale dans le plan de la feuille, sensiblement rectangulaire. La platine est fixe par rapport au pédalier et contenu dans un plan perpendiculaire au plan du dessin et parallèle au contacteur. La platine est par exemple réalisée par un morceau de tôle plié à angle droit dont un des côté est soudé au premier bras du pédalier.

La platine 208 et le contacteur 30 sont orientés de manière à ce que lorsque un effort est appliqué sur la pédale de frein, la platine 208 et le contacteur 30 s'éloignent l'un de l'autre.

Le contacteur 30 comporte une surface d'appui d'une extrémité de la tige 32 portée par une patte repliée à angle droit et fixée sur l'âme de la pédale, par exemple par soudure.

Sur la figure 6, le premier élément 202 destiné à être accroché à la fois au contacteur 30 et à la platine 208, comporte un corps principale 212 ayant sensiblement la forme d'un U muni d'un première branche 214 et d'une deuxième branche 216 séparées par une fente 218 de dimension transversale Ef sensiblement égale à la dimension transversale Ep de la platine 208 afin de permettre à la platine 208 de coulisser dans la fente .

De manière avantageuse, la fente 218 a une dimension Df selon l'axe des branches 214,216 supérieure à la distance Ds séparant une extrémité 219 inférieure de la section 209 transversale de la platine 208 et une extrémité 220 supérieure de la section 209. Le corps 212 du premier élément 202 comporte également de manière avantageuse un volet rabattable 222 venue de matière avec le corps et s'étendant d'un côté extérieure 224 de la première branche 214, le côté 224 formant charnière, ledit volet comportant sur une face 226 destiné à venir en contact d'une première face 228 du corps 212 une rainure 230 en saillie destinée à venir pénétrer dans la fente 218 une fois le volet 222 rabattu et de dimension selon l'axe des branches 214,216 sensiblement égale à la différence entre Df et Ds de manière à maintenir la platine 208 dans une position haute PH, lorsque la platine 208 est montée dans la fente 218 et le volet 222 est rabattu,. La rainure 230 est par exemple maintenue dans la fente 218 par encliquetage.

Dans l'exemple représenté, la rainure est formé par deux éléments allongés formant en section un bec de canard et permettant l'encliquetage de ladite rainure dans la fente 218.

La charnière du volet rabattable 222 peut être perpendiculaire à l'axe des branches 214,216. Il est également envisageable de prévoir seulement une entretoise, indépendante du premier élément, à interposer entre la platine et le fond de la fente

Le corps 212 comporte également un moyen d'accrochage provisoire au contacteur 30 formé par une patte 232 rabattue parallèlement à l'axe des branches 214,216 , et fixée sur un côté extérieure 234 de la deuxième patte 216, et pouvant se décrocher du contacteur 30 lorsque une traction est exercé sur le contacteur. Dans l'exemple représenté, la patte est sécable, elle comporte par exemple un point de fragilisation (non représenté) à la base la patte assurant une rupture facilité de la patte lorsqu'une contrainte en traction lui est appliquée. Dans l'exemple représenté, la patte 232 est reliée à la deuxième branche 216 par un cordon 236 (non visible). Ainsi lors de la rupture de la patte 232, celle-ci reste solidaire de la deuxième branche 216, évitant d'avoir une pièce à rechercher. Mais on peut prévoir une patte élastique, formée par un brin rappelé élastiquement en d irection de la d euxième b ranche 216. Dans ce cas, 1 e dispositif 250 est réutilisable.

Le dispositif de retenue provisoire comporte également un moyen d'orientation de la première partie 36 de la tige de commande 38 dans une orientation déterminée O formé par un pion 234 destiné à être monté entre la chape de la tige de commande et la tranche de l'âme de la pédale perpendiculaire à l'axe X' de la chape de la tige de commande. Le pion comporte un corps 233 et un moyen élastique 235 permettant l'accrochage par encliquetage du pion 234 à la chape 40, le moyen élastique 235 est par exemple en forme de bec de canard.

De manière très avantageuse le pion 234 est raccordé au corps principal 212 par un cordon 237 de manière à n'avoir qu'une seule pièce à manipuler.

De manière avantageuse, l'ensemble du dispositif de retenue provisoire est réalisé par moulage par injection de matière plastique, c'est à dire le corps principal 212, le volet rabattable 222, le crochet 232, le pion 234 et le cordon 236.

Nous allons maintenant expliquer le montage d'un dispositif de freinage munie d'une deuxième extrémité 37 de la tige de commande 38. Pour cela nous allons tous d'abord décrire le montage du dispositif de retenue provisoire 250 entre la pédale et le dispositif et le pédalier.
- Dans un premier temps, la pédale est déplacée dans le sens d'une action de freinage de manière à annuler le contact entre le contacteur 30 et la tige 32 et à permettre le montage du premier élément 202 sur la platine 208 du support de l'interrupteur 28, à environ à une tiers de la course totale de la pédale de frein.
- Dans un deuxième temps, le premier élément 202 du dispositif de retenue 250 est monté sur la platine 208 en faisant glisser les première et deuxième branches 214,216 le long de la platine 208 dans un mouvement du bas vers le haut et est maintenu dans une position plus haute que la position définitive (figure 6a).
- Dans un troisième temps, la pédale est déplacée en direction de sa position de repos, de manière à mettre la patte 232 en regard du contacteur 30 et le premier élément 202 est déplacé vers le bas de manière à ce que la patte 232 attrape le contacteur 30.
- Dans un quatrième temps, le volet 222 est rabattu de manière à ce que la rainure pénètre dans la partie inférieure de fente et s'interpose entre le fond de la fente et l'extrémité inférieure 218 de la platine 208 (figure 6b).
- Dans un cinquième temps, le pion 234 est introduit dans la chape entre l'extrémité arrière de la tige de commande et la tranche de l'âme (figure 6c).

Le procédé de montage du dispositif de freinage comporte entre autres les étapes suivantes :
- La mise en place du servomoteur dans le compartiment moteur en regard de l'orifice 15,
- le déplacement du servomoteur de manière à rapprocher la deuxième partie 37 de la tige de commande de la première partie 36 de la tige de commande et l'application d'un effort suffisant pour permettre l'accrochage mutuel de la première et de la deuxième parties36,37 de la tige de commande 38 ;
- La vérification de l'accrochage des première et deuxième parties 36,37 en déplaçant en éloignement de l'habitacle le dispositif de freinage, si la pédale de frein est déplacée en rotation en direction du compartiment moteur, le premier élément 202 a tendance à s'éloigner du contacteur 30, par conséquent la patte 232 se rompt , l'élément 202 n'est alors plus maintenu dans sa position et glisse le long de la platine 208 et reste suspendu par le cordon à la chape de la tige de commande (figure 6d) ;
- La déplacement du dispositif de freinage en direction de l'habitacle et la fixation du dispositif de freinage sur le tablier ou sur un élément rapporté sur le tablier par exemple par un dispositif à baïonnette tel décrit précédemment.

Il suffit à l'opérateur de retirer le dispositif de retenue 250 en tirant sur le cordon pour désolidariser le pion de la chape de la tige de commande. La présence du cordon 236 a également pour avantage de permettre un retrait facile et rapide du pion 234, et surtout de garantir le retrait de ce pion puisque la présence du premier élément est facilement repérable et son ablation quant à elle ne peut pas être omise.

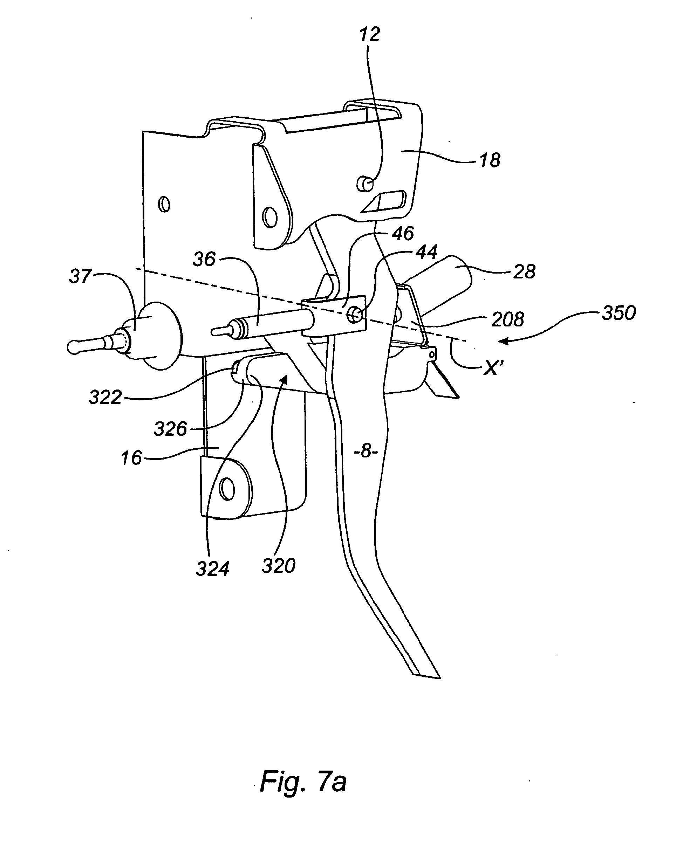

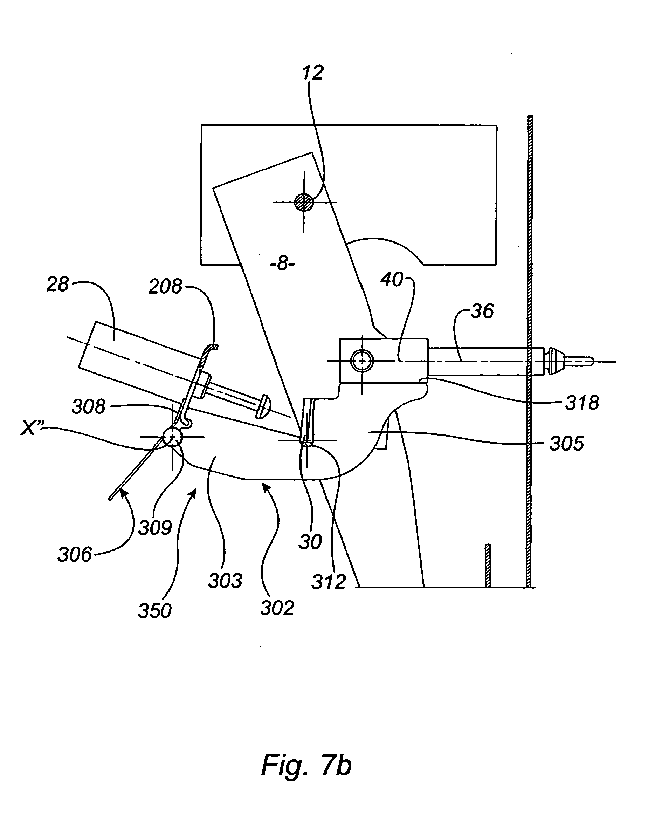

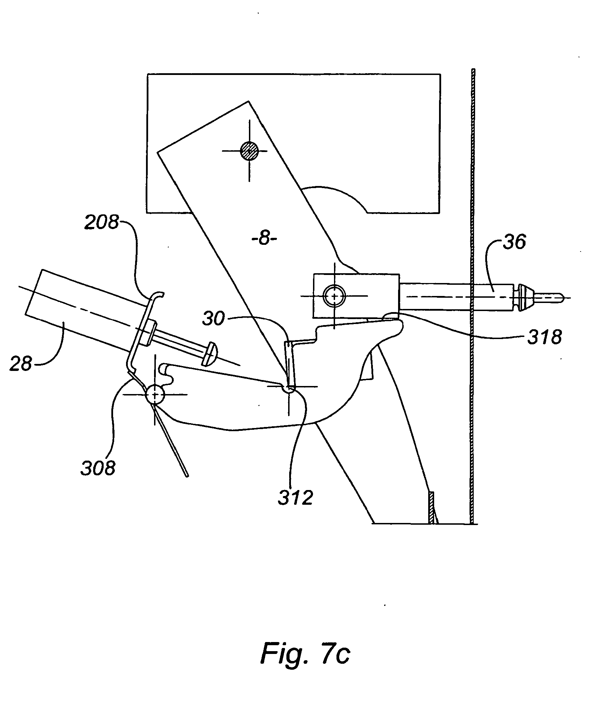

Sur les figures 7a, 7b et 7c, on peut voir un quatrième mode de réalisation d'un dispositif de retenue provisoire selon la présente invention destiné à raccorder la platine de tôle 208 formant support de l'interrupteur du dispositif d'allumage des feux de stop et le contacteur 30. Le dispositif 350 comporte un corps 302 sensiblement en forme de V munie d'une première 303 et deuxième 305 branches. La première branche 303 est munie d'un moyen d'accrochage élastique 306 formé dans l'exemple représenté un premier brin 308 ramené élastiquement en appui contre la première branche 303. Le brin 308 et la première branche 303 sont destinés à venir pincer la platine 208.
Le brin 308 est monté en rotation par rapport à la platine autour d'un axe X" et est ramené élastiquement par exemple par un ressort 309 à lame ou un ressort type « pince à linge ».

La platine 302 comporte également une gorge de réception 312 d'une extrémité inférieure du contacteur pratiqué dans le fond intérieur du V. L a distance séparant la première branche 303 de la gorge 312 est fixée de manière à ce que le dispositif 350 retienne la pédale dans la position déterminée P pour l'accrochage du système de freinage à la pédale de frein.

Une extrémité supérieure 318 de la deuxième branche 305 permet une orientation de la première partie 36 de la tige de commande en formant une support d'appui pour la chape de la tige de commande 38.

Le dispositif 350 comporte avantageusement un troisième branche 320 (Figure 7a) s'étendant sensiblement perpendiculairement aux première et deuxième branches 303,305 destiné à vernir en appui sur un élément en saillie du premier bras 16 du pédalier, par exemple une tête 322 d'une vis de maintien d'un élément électronique. La troisième branche permet d'améliorer le maintien de la platine 302 en position et de réduire la charge du ressort 309. La troisième branche comporte par exemple à une extrémité 324 éloignée des première et deuxième branches 303,305 une calotte sphérique 326 d'axe parallèle à l'axe X' et de diamètre intérieur sensiblement égal au diamètre extérieur de la tête de vis, la calotte sphérique étant en entier du même côté d'un plan sensiblement vertical passant par l'axe de la tête de vis 322.

Nous allons maintenant expliquer le montage d'un dispositif de freinage munie d'une deuxième extrémité 37 de la tige de commande 38. Pour cela nous allons tous d'abord décrire le montage du dispositif de retenue provisoire 350 entre la pédale et le dispositif et le pédalier.
- Dans un premier temps, la pédale est déplacée en éloignement de sa position de repos pour écarter la tige 32 du contacteur 30 ;
- Dans un deuxième temps, on écarte le brin 308 de la première banche 303 et d'approcher la platine 302 de la platine 208, la gorge de l'extrémité inférieure du contacteur et la calotte sphérique de la tête de vis.
- Dans un troisième temps, on relâche le brin 308, l'extrémité de la deuxième branche vient alors soulever la chape de la tige de commande et l'orienter dans la position O.

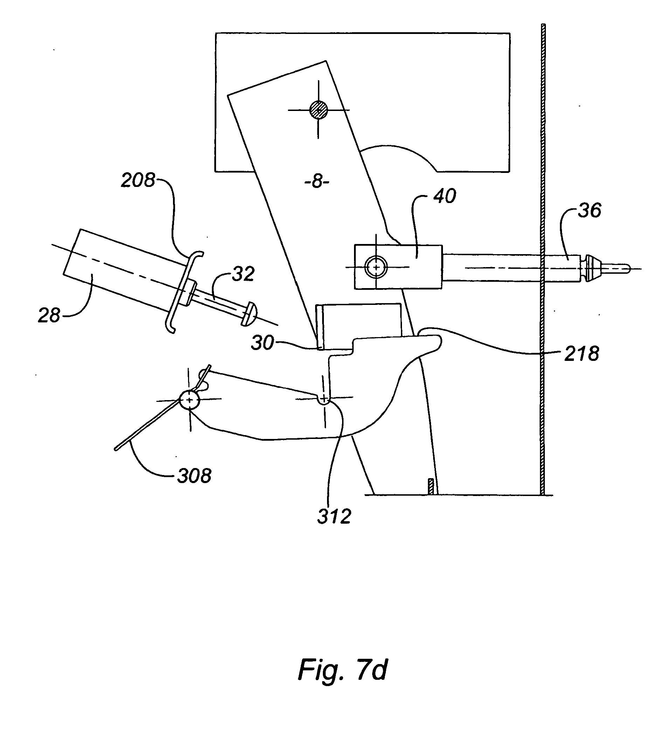

Le procédé de montage du dispositif de freinage comporte entre autres les étapes suivantes :
- La mise en place du servomoteur dans le compartiment moteur en regard de l'orifice 15,
- le déplacement du servomoteur de manière à rapprocher la deuxième partie 37 de la tige de commande de la première partie 36 de la tige de commande et l'application d'un effort suffisant pour permettre l'accrochage mutuel de la première et de la deuxième parties36,37 de la tige de commande 38 (figure 7b) ;
- La vérification de l'accrochage des première et deuxième parties 36,37 en déplaçant en éloignement de l'habitacle le dispositif de freinage, si la pédale de frein est déplacée en rotation en direction du compartiment moteur, le dispositif 350 est également entraîné par l'intermédiaire du contacteur 30 en appui contre un flan de la gorge 312, la calotte sphérique s'éloigne de la tête de vis, le brin 308 s'écarte de la première branche 303, la platine et déséquilibrée et s'écarte par gravité du pédalier et de la pédale et tombe par gravité dans le fond de l'habitacle.(figures 7c et 7d))
- La déplacement du dispositif de freinage en direction de l'habitacle et la fixation du dispositif de freinage sur le tablier ou sur un élément rapporté sur le tablier par exemple par un dispositif à baïonnette tel que précédemment décrit.

Ce dispositif de retenue 350 a pour avantage de permettre une détection rapide de l'accrochage effectif de la première et de la deuxième parties de la tige de commande, puisque la chute du dispositif de retenue provoque un bruit, la présence de la cale sur le fond de l'habitacle permet également rapidement de repérer si l'accrochage a eu lieu.

Il est possible de prévoir un moyen de retenue du dispositif 350 au pédalier ou à la pédale si l'on ne souhaite pas que le dispositif tombe au fond de l'habitacle.

Le dispositif a pour avantage d'être réutilisable pour des montages suivants.

De plus, dans le cas d'un montage manuel du dispositif de freinage sur la tablier, si la cale est toujours sur la pédale, elle immobilise toujours la pédale dans la position de recul déterminée P, soit parce que l'opérateur a omis d'effectuer l'étape de vérification de l'accrochage de la première et de la deuxième partie de la tige de commande, soit parce que la vérification a révélée que les première et deuxième parties de la tige de commande ne sont pas liées, l'opérateur ne peut alors pas fixer le dispositif de freinage au tablier du fait des efforts à fournir pour vaincre les efforts exercés par les moyens de rappel disposés dans le système de freinage. En effet, la pédale n'étant pas dans sa position de repos mais dans une position à un tiers de sa course comme décrit dans les exemples représentés, les moyens de rappel du dispositif de freinage sont partiellement comprimés.

Le dispositif de retenue selon la présente invention a également pour avantage de protéger le dispositif d'allumage des feux de stop et d'éviter un surréglage de celui-ci, le réglage dudit dispositif s'effectuant par la pédale de frein lorsqu'elle est en position repos.

On a bien réaliser un procédé de montage d'un dispositif de freinage de mise en oeuvre rapide et économique, assurant un montage d'une trèsgrande sécurité.

Il est bien entendu que dans les exemples décrits précédemment, la tige de commande est composite une première partie étant portée par la pédale et une deuxième partie étant portée par le s ervomoteur, cependant on peut prévoir d'avoir une tige de commande monobloc portée par la pédale et un servomoteur comportant un dispositif d'accrochage automatique d'une extrémité longitudinale de la tige de commande ou d'avoir une tige de commande montée dans le servomoteur et un dispositif d'accrochage automatique porté par la pédale. Dans ce dernier cas il n'est pas nécessaire de prévoir un dispositif de retenue provisoire comportant des moyens d'orientation de la tige de commande. Cependant il faudra prévoir un pion en saillie de la face extérieure de l'âme de la pédale pour remplacer l'extrémité en saillie de la goupille qui formait le pivot entre la tige de commande et la pédale

Le dispositif d'accrochage est prévu pour être fixé manuellement sur le tablier, mais il est envisageable de prévoir un mode d'accrochage par un systèmes de tirants traversant bien connus de l'homme du métier, utilisant des outillages pneumatiques ou électriques.

Il est bien entendu que le dispositif de retenue ainsi que le procédé de montage selon la présente invention est applicable au montage de dispositifs autres que les dispositifs de freinage.

La présente invention s'applique notamment à l'industrie automobile.

La présente invention s'applique principalement à l'industrie du freinage pour véhicule automobile, en particulier pour voiture particulière.

## Revendications

1. Procédé de montage d'un dispositif de commande dans un véhicule automobile, ledit dispositif étant destiné à être monté dans un compartiment moteur dudit véhicule et à être commandé par l'intermédiaire d'une tige de commande (36) reliée à une pédale (6) a partir d'un habitacle, ledit véhicule comportant un pédalier monté dans l'habitacle du véhicule automobile, ledit pédalier (2) étant muni d'un boîtier de pédalier monté fixe sur un tablier de séparation du compartiment moteur de l'habitacle, une pédale montée solidaire en rotation par rapport à une chape, ledit dispositif de commande et ladite pédale comportant respectivement des moyens de liaison (36, 37) de l'un à l'autre, un dispositif de retenue provisoire (50,150,250,350) étant monté sur la pédale et le pédalier de manière à ce que la pédale soit maintenue dans une position déterminée (P) et à ce que les moyens de liaison de la pédale au dispositif de commande, portés par la pédale soient maintenus dans une direction déterminée (O), ledit procédé comportant entre autres les étapes :
- d'amener le dispositif de commande dans le compartiment moteur de manière à mettre les moyens de liaison portés respectivement par la pédale et le dispositif de commande en regard l'un de l'autre ;
- de déplacer le servomoteur en direction de l'habitacle et de solidariser le dispositif de commande à la pédale ;
**caractérisé en ce qu**'il comporte également les étapes de :
- de vérifier si la liaison solidaire entre la pédale et le dispositif de commande est effective en déplaçant le dispositif de commande en éloignement de l'habitacle de manière à entraîner la pédale par l'intermédiaire de la tige de commande (38) et à faire passer le dispositif de retenue provisoire d'une première position à une deuxième position ;
- de fixer le dispositif de commande au tablier du véhicule automobile.

2. Procédé de montage selon la revendication 1 **caractérisé en ce que** le dispositif de commande est un dispositif de freinage comportant un servomoteur d'assistance pneumatique au freinage et **en ce que** la pédale est une pédale de frein.

3. Procédé de montage selon la revendication 1 ou 2 **caractérisé en ce que** le passage de la première position à la deuxième position s'effectue par déséquilibrage dudit dispositif de retenue

4. Procédé selon la revendication précédente **caractérisé en ce que** la deuxième position de l'élément de retenue est une position éloignée de la pédale et de la chape (40) du pédalier.

5. Procédé selon la revendication précédente **caractérisé en ce que** la deuxième position est obtenue par gravité.

6. Procédé selon l'une des revendications précédentes **caractérisé en ce que** la pédale de frein porte une première partie (36) de la tige de commande et le servomoteur porte une deuxième partie (37) de la tige de commande (38) et **en ce que** lesdites premières et deuxièmes parties comportent des moyens d'accrochage mutuel.

7. Procédé de montage selon la revendication précédente **caractérisé en ce que** les moyens d'accrochage mutuel sont des moyens d'encliquetage formés par un élément mâle et un élément femelle portés par les première et deuxième parties (36,37) et **en ce que** l'élément femelle comporte un moyen élastique d'encliquetage (416),

8. Procédé selon la revendication précédente **caractérisé en ce que** le moyen élastique d'encliquetage est une épingle (418).

9. Dispositif de retenue provisoire d'une pédale par rapport à une chape dans une position déterminée (P) et de moyens de liaison de la pédale à un dispositif de commande dans une direction déterminée (O) pour la mise en oeuvre d'un processus selon l'une quelconque des revendications précédentes **caractérisé en ce qu'**il passe d'une première position à une deuxième position pour détecter l'achèvement dudit processus.

10. Dispositif selon la revendication précédente **caractérisé en ce que** ledit dispositif de retenue est montée en réaction à cheval sur la chape (40) du pédalier et sur une âme (8) de la pédale.

11. Dispositif selon la revendication précédente **caractérisé en ce que** ledit dispositif de retenue (50) comporte un premier appui (52) sur l'âme (8) de la pédale et un deuxième appui (56) sur le boîtier de pédalier (4).

12. Dispositif de retenue selon la revendication précédente **caractérisé en ce qu'**il comporte un logement (52) de réception et de retenue d'un élément en saillie (46) de l'âme de la pédale réalisant le premier appui.

13. Dispositif de retenue selon la revendication précédente **caractérisé en ce que** le logement comporte un redent (54) de retenue de l'élément en saillie.

14. Dispositif de retenue selon la revendication 12 **caractérisé en ce que** le logement (52) comporte des moyens d'accrochage par encliquetage.

15. Dispositif de retenue selon la revendication 12, 13 ou 14 **caractérisé en ce que** l'élément en saillie (46) est une extrémité d'une goupille (46) de fixation d'une chape (40) de la première partie (36) de la tige de commande (38).

16. Dispositif de retenue selon l'une des revendications 12 à 16 **caractérisé en ce qu'**il comporte une surface d'appui (56) venant en contact d'une extrémité (58) d'un deuxième bras (18) du boîtier de pédalier (4) du pédalier réalisant le deuxième appui.

17. Dispositif de retenue selon la revendication précédente en ce qu'il comporte des moyens de maintien axial du dispositif par rapport à la chape du pédalier.

18. Dispositif de retenue selon la revendication précédente **caractérisé en ce que** lesdits moyens de maintien axial comportent un premier et un deuxième rebords (59,63) formant un glissière(57) et bordant la surface d'appui (56).

19. Dispositif de retenue selon la revendication 16, 17 ou 18 **caractérisé en qu'**il comporte un troisième appui formé par un doigt (60) sensiblement perpendiculaire à la surface d'appui (56) et venant reposé contre une extrémité (62) d'une goupille en saillie de la chape, la dite goupille formant un axe (X) de rotation de la pédale par rapport à la chape.

20. Dispositif de retenue selon la revendication 17,18 ou 19 **caractérisé en ce que** des moyens de maintien axial (64) supplémentaire sont prévus, comportant une patte repliée en forme de crochet disposé sensiblement à une extrémité opposée dans le sens de déplacement de la pédale, à l'extrémité du moyen de retenue comportant le logement (52).

21. Dispositif de retenue selon l'une des revendications 12 à 20 **caractérisé en ce qu'**il comporte un moyen d'orientation (74) de la première extrémité (36) de la tige de commande (38) dans une orientation déterminée (O) comportant un doigt (76) prolongeant le logement (52) et formant appui pour la chape (40) de la tige de commande.

22. Dispositif de retenue (150) selon la revendication 9 à 11 **caractérisé en ce qu'**il comporte un corps (101) muni à une première extrémité d'une patte (103) destiné à venir pincé l'âme (108) de la pédale et à une deuxième extrémité un élément (110) destiné à être monté dans une lumière (108) pratiquée dans un premier bras de la chape (4) du pédalier, ledit élément (110) étant de forme complémentaire à ladite lumière (108) et **en ce que** ledit élément (110) est en saillie d'un disque (107) de diamètre supérieur aux dimensions transversales de l'élément (110) destiné à venir en appui sur le pourtour de la lumière (108).

23. Dispositif de retenue selon la revendication précédente **caractérisé en ce qu'**il comporte un moyen (112) d'orientation de la première partie (36) de la tige de commande (38) comportant un bras s'étendant sensiblement radialement du corps (101) et muni à une extrémité éloignée du corps (101) d'une corniche d'appui de la première partie (36) de la tige de commande (38).

24. Dispositif de retenue selon la revendication 9 **caractérisé en ce qu'**il comporte un premier élément 202 solidaire d'un support (208) d'un interrupteur (28) d'un dispositif d'allumage des feux de stop, ledit support (208) étant fixé au pédalier et d'un contacteur 30 dudit dispositif (26) d'allumage des feux de stop, ledit contacteur étant fixé sur l'âme de la pédale, ledit support étant formé par une platine percée d'un orifice de réception dudit interrupteur (28) perpendiculaire à l'âme (8) de ladite pédale, et ledit contacteur (30) étant formé par surface perpendiculaire à l'âme de la pédale et sensiblement parallèle audit support lorsque la pédale est en position repos, ledit premier élément maintenant ladite pédale dans une position déterminée (P) et un deuxième élément interposé entre la chape (40) de ladite tige de commande (38) et l'âme (8) de la pédale maintenant la première partie (36) de la tige de commande (38) dans une orientation déterminée (O).

25. Dispositif de retenue selon la revendication précédente **caractérisé en ce que** le premier élément (202) a sensiblement la forme d'un U comportant une première et une deuxième branche (214,216) destinées à être montées de part et d'autre de la platine (208), et séparées par une fente (218) de dimension transversale sensiblement égale à la dimension transversale de la platine (208), lesdits première et deuxième branches (214,216) étant raccordés par un fond disposé lorsque ledit dispositif est monté sur le véhicule en dessous selon un axe vertical de la platine (208) et **en ce qu'**il comporte une patte d'accrochage (232) de la deuxième branche (216) du premier élément (202) au contacteur (30).

26. Dispositif de retenue selon la revendication précédente **caractérisé en ce que** la patte d'accrochage (232) est sécable.

27. Dispositif de retenue selon la revendication 24 à 26 **caractérisé en ce qu'**il comporte un volet rabattable (222) sur une face extérieure éloignée de l'âme (8) du premier élément, ledit volet (222) étant muni d'une rainure (230) en saillie du volet (222) et venant s'interposer entre la platine et le fond du premier élément afin de limiter le déplacement des première et deuxième branches (214,216) du premier élément (202) par rapport à la platine (208).

28. Dispositif de retenue selon la revendication précédente **caractérisé en ce que** le volet rabattable (222) est venu de matière avec la première branche (214).

29. Dispositif de retenue selon la revendication 24 à 28 **caractérisé en ce que** le deuxième élément support est un pion en forme de bec de canard apte à s'encliqueter sur la chape (40) de la première partie de la tige de commande.

30. Dispositif de retenue selon l'une quelconque des revendications précédentes **caractérisé en ce que** le premier élément et le deuxième éléments sont reliés par un cordon (237).

31. Dispositif de retenue selon la revendication précédente **caractérisé en ce qu'**il est réalisé par injection de matériau plastique dans un moule.

32. Dispositif de retenue selon la revendication 24 **caractérisé en ce que** ledit premier élément comporte une platine (302) sensiblement en forme de V, munie d'une première et d'une deuxième branches (303,305), lesdits première et deuxième branches (303,305) étant raccordés par un fond disposé lorsque ledit dispositif est monté sur le véhicule en dessous selon un axe vertical de la support (208), ladite première branche (303) comportant un moyen élastique d'accrochage (306) au support (208) de l'interrupteur (28), **en ce qu'**une gorge (312) est prévue entre les première et deuxième branches (303,305) pour recevoir une extrémité du contacteur (30) et **en ce que** le deuxième élément est formé par une extrémité (318) de la deuxième branche (305) comportant un surface d'appui pour la chape (40) de la tige de commande.

33. Dispositif de retenue selon la revendication précédente **caractérisé en ce que** la platine comporte une troisième branche (320) sensiblement perpendiculaire au première et deuxième branches (303,305), ladite troisième branche (320) étant munie en appui sur un élément en saillie du pédalier et apte à quitter son appui lorsque le dispositif est emporté par la pédale.

34. Dispositif de retenue selon la revendication 32 ou 33 **caractérisé en ce que** le moyen élastique (306) est formé par un brin (308) rappelé en contact de la première branche (303) par un ressort (309) type « 'pince à linge »

## Claims

1. Method of mounting a control device in a motor vehicle, the said device being intended to be mounted in an engine compartment of the said vehicle and to be controlled by way of a control rod (38) connected to a pedal (6) from a cabin, the said vehicle comprising a pedal carriage mounted in the motor vehicle cabin, the said pedal carriage (2) being provided with a pedal carriage box mounted fixedly on a bulkhead separating the engine compartment from the cabin, a pedal mounted in a rotationally coupled manner with respect to a clevis, the said control device and the said pedal respectively comprising means (36, 37) for connecting them to one another, a temporary retaining device (50, 150, 250, 350) being mounted on the pedal and the pedal carriage so that the pedal is maintained in a given position (P) and so that the means, borne by the pedal, for connecting the pedal to the control device are maintained in a given direction (O), the said method comprising, inter alia, the following steps:
- bringing the control device into the engine compartment so as to position the connecting means borne respectively by the pedal and the control device opposite one another; and
- moving the booster in the direction of the cabin and securing the control device to the pedal;
**characterized in that** it also comprises the following steps:
- checking if the rigid connection between the pedal and the control device is effective by moving the control device away from the cabin so as to drive the pedal by way of the control rod (38) and so as to pass the temporary retaining device from a first position to a second position; and
- fixing the control device to the bulkhead of the motor vehicle.

2. Mounting method according to Claim 1, **characterized in that** the control device is a braking device comprising a pneumatic brake booster, and **in that** the pedal is a brake pedal.

3. Mounting method according to Claim 1 or 2, **characterized in that** the passage from the first position to the second position is brought about by unbalancing the said retaining device.

4. Method according to the preceding claim, **characterized in that** the second position of the retaining element is a position remote from the pedal and from the clevis (40) of the pedal carriage.

5. Method according to the preceding claim, **characterized in that** the second position is obtained by gravity.

6. Method according to one of the preceding claims, **characterized in that** the brake pedal bears a first part (36) of the control rod and the booster bears a second part (37) of the control rod (38), and **in that** the said first and second parts comprise mutual attachment means.

7. Mounting method according to the preceding claim, **characterized in that** the mutual attachment means are snap-fastening means formed by a male element and a female element which are borne by the first and second parts (36, 37), and **in that** the female element comprises an elastic snap-fastening means (416).

8. Method according to the preceding claim, **characterized in that** the elastic snap-fastening means is a spring clip (418).

9. Retaining device for the temporary retention of a pedal with respect to a clevis in a given position (P) and of means for connecting the pedal to a control device in a given direction (O) for implementing a process according to any one of the preceding claims, **characterized in that** it passes from a first position to a second position to detect the completion of the said process.

10. Device according to the preceding claim, **characterized in that** the said retaining device is mounted in reaction astride the clevis (40) of the pedal carriage and astride a core (8) of the pedal.

11. Device according to the preceding claim, **characterized in that** the said retaining device (50) comprises a first bearing point (52) on the core (8) of the pedal and a second bearing point (56) on the pedal carriage box (4).

12. Retaining device according to the preceding claim, **characterized in that** it comprises a housing (52), forming the first bearing point, for receiving and retaining an element (46) projecting from the core of the pedal.

13. Retaining device according to the preceding claim, **characterized in that** the housing comprises a shoulder (54) for retaining the projecting element.

14. Retaining device according to Claim 12, **characterized in that** the housing (52) comprises snap-fastening attachment means.

15. Retaining device according to Claim 12, 13 or 14, **characterized in that** the projecting element (46) is one end of a pin (46) for fastening a clevis (40) of the first part (36) of the control rod (38).

16. Retaining device according to one of Claims 12 to 16, **characterized in that** it comprises a bearing surface (56) coming into contact with an end (58), forming the second bearing point, of a second arm (18) of the pedal carriage box (4) of the pedal carriage.

17. Retaining device according to the preceding claim, **characterized in that** it comprises means for the axial retention of the device with respect to the clevis of the pedal carriage.

18. Retaining device according to the preceding claim, **characterized in that** the said axial retention means comprise first and second rims (59, 63) forming a slideway (57) and bordering the bearing surface (56).

19. Retaining device according to Claim 16, 17 or 18, **characterized in that** it comprises a third bearing point formed by a finger (60) substantially perpendicular to the bearing surface (56) and resting against one end (62) of a pin projecting from the clevis, the said pin forming an axis (X) of rotation for the pedal with respect to the clevis.

20. Retaining device according to Claim 17, 18 or 19, **characterized in that** additional axial retention means (64) are provided, comprising a lug folded in the form of a hook arranged substantially at an end which, in the direction of movement of the pedal, is opposed to that end of the retaining means comprising the housing (52).

21. Retaining device according to one of Claims 12 to 20, **characterized in that** it comprises a means (74) for orienting the first end (36) of the control rod (38) in a given orientation (O), comprising a finger (76) extending the housing (52) and forming a bearing point for the clevis (40) of the control rod.

22. Retaining device (150) according to Claims 9 to 11, **characterized in that** it comprises a body (101) provided at a first end with a lug (103) intended to clamp the core (8) of the pedal and at a second end with an element (110) intended to be mounted in an aperture (108) made in a first arm of the clevis (40) of the pedal carriage, the said element (110) being complementary in shape with the said aperture (108), and **in that** the said element (110) projects from a disc (107) whose diameter is greater than the transverse dimensions of the element (110) intended to bear on the periphery of the aperture (108).

23. Retaining device according to the preceding claim, **characterized in that** it comprises a means (112) for orienting the first part (36) of the control rod (38), comprising an arm extending substantially radially from the body (101) and provided at an end remote from the body (101) with a bearing bracket for the first part (36) of the control rod (38).

24. Retaining device according to Claim 9, **characterized in that** it comprises a first element (202) secured to a support (208) of a switch (28) of a device for activating the stop lights, the said support (208) being fixed to the pedal carriage and to a contactor (30) of the said device (26) for activating the stop lights, the said contactor being fixed to the core of the pedal, the said support being formed by a plate pierced with an orifice for receiving the said switch (28) perpendicular to the core (8) of the said pedal, and the said contactor (30) being formed by a surface perpendicular to the core of the pedal and substantially parallel to the said support when the pedal is in the rest position, the said first element maintaining the said pedal in a given position (P), and a second element interposed between the clevis (40) of the said control rod (38) and the core (8) of the pedal maintaining the first part (36) of the control rod (38) in a given orientation (O).

25. Retaining device according to the preceding claim, **characterized in that** the first element (202) has the approximate shape of a U comprising first and second branches (214, 216) intended to be mounted on either side of the plate (208), these branches being separated by a slot (218) whose transverse dimension is substantially equal to the transverse dimension of the plate (208), the said first and second branches (214, 216) being joined by means of a base which, when the said device is mounted on the vehicle, is arranged below the plate (208) with respect to a vertical axis thereof, and **in that** it comprises a lug (232) for attaching the second branch (216) of the first element (202) to the contactor (30).

26. Retaining device according to the preceding claim, **characterized in that** the attachment lug (232) is severable.

27. Retaining device according to Claims 24 to 26, **characterized in that** it comprises a fold-down flap (222) on an outer face of the first element that is remote from the core (8), the said flap (222) being provided with a groove (230) projecting from the flap (222) and being interposed between the plate and the base of the first element so as to limit the movement of the first and second branches (214, 216) of the first element (202) with respect to the plate (208).

28. Retaining device according to the preceding claim, **characterized in that** the fold-down flap (222) is formed integrally with the first branch (214).

29. Retaining device according to Claims 24 to 28, **characterized in that** the second element is a block in the form of a duck's bill, which is capable of engaging by snap-fastening on the clevis (40) of the first part of the control rod.

30. Retaining device according to any one of the preceding claims, **characterized in that** the first element and the second element are connected by a cord (237).

31. Retaining device according to the preceding claim, **characterized in that** it is produced by injecting plastic material in a mould.

32. Retaining device according to Claim 24, **characterized in that** the said first element comprises an approximately V-shaped plate (302) provided with first and second branches (303, 305), the said first and second branches (303, 305) being joined by a base which, when the said device is mounted on the vehicle, is arranged below the support (208) with respect to a vertical axis thereof, the said first branch (303) comprising an elastic means (306) for attachment to the support (208) of the switch (28), **in that** a channel (312) is provided between the first and second branches (303, 305) to receive one end of the contactor (30), and **in that** the second element is formed by an end (318) of the second branch (305) comprising a bearing surface for the clevis (40) of the control rod.

33. Retaining device according to the preceding claim, **characterized in that** the plate comprises a third branch (320) substantially perpendicular to the first and second branches (303, 305), the said third branch (320) being brought to bear on an element projecting from the pedal carriage and being able to leave its bearing point when the device is carried along by the pedal.

34. Retaining device according to Claim 32 or 33, **characterized in that** the elastic means (306) is formed by a strand (308) returned into contact with the first branch (303) by a spring (309) of the "clothes peg" type.

## Patentansprüche

1. Verfahren zum Montieren einer Steuervorrichtung in einem Kraftfahrzeug, wobei die Vorrichtung in einem Motorraum des Fahrzeugs angebracht und ausgehend von einem Fahrzeuginnenraum mittels einer mit einem Pedal (6) verbundenen Steuerstange (38) gesteuert werden soll, wobei das Fahrzeug eine im Kraftfahrzeuginnenraum angebrachte Pedalanordnung aufweist, wobei die Pedalanordnung (2) mit einem Pedalanordnungsgehäuse versehen ist, das feststehend an einer Spritzwand zur Trennung des Motorraums von dem Fahrzeuginnenraum angebracht ist, ein bezüglich einer Abdeckung drehfest angebrachtes Pedal, wobei die Steuervorrichtung und das Pedal jeweils Mittel (36, 37) aufweisen, um miteinander verbunden zu werden, wobei eine Vorrichtung zum vorübergehenden Halten (50, 150, 250, 350) so am Pedal und an der Pedalanordnung angebracht ist, dass das Pedal in einer bestimmten Position (P) gehaltert ist und die von dem Pedal getragenen Mittel zur Verbindung des Pedals mit der Steuervorrichtung in einer bestimmten Richtung (O) gehaltert sind, wobei das Verfahren unter anderem die Schritte umfasst, bei denen:
- die Steuervorrichtung so in den Motorraum eingebracht wird, dass die von dem Pedal bzw. von der Steuervorrichtung getragenen Verbindungsmittel einander gegenüber angeordnet werden;
- der Servomotor in Richtung Fahrzeuginnenraum verlagert und die Steuervorrichtung fest mit dem Pedal verbunden wird;
**dadurch gekennzeichnet, dass** es auch die Schritte umfasst, bei denen:
- überprüft wird, ob die feste Verbindung zwischen dem Pedal und der Steuervorrichtung wirksam ist, indem die Steuervorrichtung so von dem Fahrzeuginnenraum weg verlagert wird, dass das Pedal mittels der Steuerstange (38) angetrieben und die Vorrichtung zum vorübergehenden Halten von einer ersten Position in eine zweite Position bewegt wird;
- die Steuervorrichtung an der Spritzwand des Kraftfahrzeugs befestigt wird.

2. Montageverfahren nach Anspruch 1, **dadurch gekennzeichnet, dass** die Steuervorrichtung eine Bremsvorrichtung mit einem pneumatischen Servomotor zur Bremsunterstützung ist und das Pedal ein Bremspedal ist.

3. Montageverfahren nach Anspruch 1 oder 2, **dadurch gekennzeichnet, dass** der Übergang von der ersten Position in die zweite Position **dadurch** erfolgt, dass die Haltevorrichtung in Ungleichgewicht gebracht wird.

4. Verfahren nach dem vorhergehenden Anspruch, **dadurch gekennzeichnet, dass** die zweite Position des Halteelements eine von dem Pedal und von der Abdeckung (40) der Pedalanordnung beabstandete Position ist.

5. Verfahren nach dem vorhergehenden Anspruch, **dadurch gekennzeichnet, dass** die zweite Position durch die Schwerkraft erhalten wird.

6. Verfahren nach einem der vorhergehenden Ansprüche, **dadurch gekennzeichnet, dass** das Bremspedal einen ersten Abschnitt (36) der Steuerstange und der Servomotor einen zweiten Abschnitt (37) der Steuerstange (38) trägt und dass der erste und der zweite Abschnitt Mittel für ein gegenseitiges Einhaken aufweisen.

7. Montageverfahren nach dem vorhergehenden Anspruch, **dadurch gekennzeichnet, dass** die Mittel für ein gegenseitiges Einhaken Einrastmittel sind, die durch ein Steckelement und ein Buchsenelement gebildet sind, welche von dem ersten und dem zweiten Abschnitt (36, 37) getragen sind, und dass das Buchsenelement ein elastisches Einrastmittel (416) aufweist.

8. Verfahren nach dem vorhergehenden Anspruch, **dadurch gekennzeichnet, dass** das elastische Einrastmittel eine Klammer (418) ist.

9. Vorrichtung zum vorübergehenden Halten eines Pedals in einer bestimmten Position (P) bezüglich einer Abdeckung und mit Mitteln zur Verbindung des Pedals mit einer Steuervorrichtung in einer bestimmten Richtung (O) zur Anwendung eines Verfahrens nach einem der vorhergehenden Ansprüche, **dadurch gekennzeichnet, dass** sie von einer ersten Position in eine zweite Position übergeht, um das Ende des Verfahrens zu erfassen.

10. Vorrichtung nach dem vorhergehenden Anspruch, **dadurch gekennzeichnet, dass** die Haltevorrichtung auf der einen Seite an der Abdeckung (40) der Pedalanordnung und auf der anderen Seite an einem Steg (8) des Pedals wirkend angebracht ist.

11. Vorrichtung nach dem vorhergehenden Anspruch, **dadurch gekennzeichnet, dass** die Haltevorrichtung (50) eine erste Anlage (52) am Steg (8) des Pedals und eine zweite Anlage (56) am Pedalanordnungsgehäuse (4) aufweist.

12. Haltevorrichtung nach dem vorhergehenden Anspruch, **dadurch gekennzeichnet, dass** sie einen Sitz (52) für die Aufnahme und für das Halten eines von dem Pedalsteg hervorstehenden Elements (46) aufweist, der die erste Anlage bildet.

13. Haltevorrichtung nach dem vorhergehenden Anspruch, **dadurch gekennzeichnet, dass** der Sitz eine Stufe (54) zum Halten des hervorstehenden Elements aufweist.

14. Haltevorrichtung nach Anspruch 12, **dadurch gekennzeichnet, dass** der Sitz (52) Mittel zum Einhaken durch Einrasten aufweist.

15. Haltevorrichtung nach Anspruch 12, 13 oder 14, **dadurch gekennzeichnet, dass** das hervorstehende Element (46) ein Ende eines Stifts (46) zur Befestigung einer Abdeckung (40) des ersten Abschnitts (36) der Steuerstange (38) ist.

16. Haltevorrichtung nach einem der Ansprüche 12 bis 16, **dadurch gekennzeichnet, dass** sie eine Anlagefläche (56) aufweist, die mit einem Ende (58) eines zweiten Arms (18) des Pedalanordnungsgehäuses (4) der Pedalanordnung in Berührung gelangt und die zweite Anlage bildet.

17. Haltevorrichtung nach dem vorhergehenden Anspruch, **dadurch gekennzeichnet, dass** sie Mittel für eine axiale Halterung der Vorrichtung bezüglich der Abdeckung der Pedalanordnung aufweist.

18. Haltevorrichtung nach dem vorhergehenden Anspruch, **dadurch gekennzeichnet, dass** die Mittel für eine axiale Halterung einen ersten und einen zweiten Rand (59, 63) aufweisen, die eine Gleitfläche (57) bilden und die Anlagefläche (56) umranden.

19. Haltevorrichtung nach Anspruch 16, 17 oder 18, **dadurch gekennzeichnet, dass** sie eine dritte Anlage aufweist, die durch einen Finger (60) gebildet ist, der im Wesentlichen senkrecht zur Anlagefläche (56) verläuft und auf einem Ende (62) eines von der Abdeckung hervorstehenden Stifts ruht, wobei der Stift eine Achse (X) der Drehung des Pedals bezüglich der Abdeckung bildet.

20. Haltevorrichtung nach Anspruch 17, 18 oder 19, **dadurch gekennzeichnet, dass** Mittel (64) für eine zusätzliche axiale Halterung vorgesehen sind, die eine hakenförmig gefaltete Lasche aufweisen, die im Wesentlichen an einem Ende angeordnet ist, das in Pedalverlagerungsrichtung dem Ende des den Sitz (52) aufweisenden Haltemittels entgegengesetzt ist.

21. Haltevorrichtung nach einem der Ansprüche 12 bis 20, **dadurch gekennzeichnet, dass** sie ein Mittel (74) zur Orientierung des ersten Endes (36) der Steuerstange (38) in eine bestimmte Richtung (O) aufweist, das einen Finger (76) besitzt, der die Aufnahme (52) verlängert und eine Anlage für die Abdeckung (40) der Steuerstange bildet.

22. Haltevorrichtung (150) nach den Ansprüchen 9 bis 11, **dadurch gekennzeichnet, dass** sie einen Körper (101) aufweist, der an einem ersten Ende mit einer Lasche (103), die den Steg (108) des Pedals einklemmen soll, und an einem zweiten Ende mit einem Element (110) versehen ist, das in einer Öffnung (108) angebracht werden soll, welche in einem ersten Arm der Abdeckung (4) der Pedalanordnung ausgebildet ist, wobei das Element (110) eine zur Öffnung (108) komplementäre Form besitzt, und dass das Element (110) von einer Scheibe (107) hervorsteht, deren Durchmesser größer ist als die Querabmessungen des Elements (110), das an den Umfang der Öffnung (108) in Anlage gelangen soll.

23. Haltevorrichtung nach dem vorhergehenden Anspruch, **dadurch gekennzeichnet, dass** sie ein Mittel (112) zur Orientierung des ersten Abschnitts (36) der Steuerstange (38) aufweist, das einen Arm aufweist, der sich ausgehend vom Körper (101) im Wesentlichen radial erstreckt und an einem von dem Körper (101) beabstandeten Ende mit einer Auskragung für die Anlage des ersten Abschnitts (36) der Steuerstange (38) versehen ist.

24. Haltevorrichtung nach Anspruch 9, **dadurch gekennzeichnet, dass** sie ein erstes Element 202 aufweist, das mit einem Träger (208) eines Schalters (28) einer Vorrichtung zum Einschalten der Bremsleuchten, wobei der Träger (208) an der Pedalanordnung befestigt ist, und mit einem Kontaktgeber (30) der Vorrichtung (26) zum Einschalten der Bremsleuchten fest verbunden ist, wobei der Kontaktgeber am Steg des Pedals befestigt ist, wobei der Träger durch eine Platte gebildet ist, die von einer Öffnung zur Aufnahme des Schalters (28) durchsetzt ist und senkrecht zum Steg (8) des Pedals verläuft, und wobei der Kontaktgeber (30) durch eine Oberfläche gebildet ist, die senkrecht zum Steg des Pedals und im Wesentlichen parallel zum Träger verläuft, wenn sich das Pedal in der Ruheposition befindet, wobei das erste Element das Pedal in einer bestimmten Position (P) haltert und ein zweites Element, das zwischen der Abdeckung (40) der Steuerstange (38) und dem Steg (8) des Pedals angeordnet ist, den ersten Abschnitt (36) der Steuerstange (38) in einer bestimmten Richtung (O) haltert.

25. Haltevorrichtung nach dem vorhergehenden Anspruch, **dadurch gekennzeichnet, dass** das erste Element (202) im Wesentlichen die Form eines U mit einem ersten und einem zweiten Schenkel (214, 216) besitzt, die auf der einen und auf der anderen Seite der Platte (208) angebracht werden sollen und durch einen Spalt (218) voneinander beabstandet sind, dessen Querabmessung im Wesentlichen der Querabmessung der Platte (208) entspricht, wobei der erste und der zweite Schenkel (214, 216) durch einen Boden miteinander verbunden sind, der gemäß einer vertikalen Achse unter der Platte (208) angeordnet ist, wenn die Vorrichtung am Fahrzeug angebracht ist, und dass es eine Lasche (232) zum Einhaken des zweiten Schenkels (216) des ersten Elements (202) an den Kontaktgeber (30) aufweist.

26. Haltevorrichtung nach dem vorhergehenden Anspruch, **dadurch gekennzeichnet, dass** die Einhaklasche (232) teilbar ist.

27. Haltevorrichtung nach den Ansprüchen 24 bis 26, **dadurch gekennzeichnet, dass** sie auf einer von dem Steg (8) beabstandeten Außenfläche des ersten Elements eine umlegbare Klappe (222) aufweist, wobei die Klappe (222) mit einer Rille (230) versehen ist, die von der Klappe (222) hervorsteht und sich zwischen die Platte und den Boden des ersten Elements einfügt, um die Verlagerung des ersten und des zweiten Schenkels (214, 216) des ersten Elements (202) bezüglich der Platte (208) zu begrenzen.

28. Haltevorrichtung nach dem vorhergehenden Anspruch, **dadurch gekennzeichnet, dass** die umlegbare Klappe (222) mit dem ersten Schenkel (214) einstückig ausgebildet ist.

29. Haltevorrichtung nach den Ansprüchen 24 bis 28, **dadurch gekennzeichnet, dass** das zweite Element ein entenschnabelförmiger Zapfen ist, der in die Abdeckung (40) des ersten Abschnitts der Steuerstange einrasten kann.

30. Haltevorrichtung nach einem der vorhergehenden Ansprüche, **dadurch gekennzeichnet, dass** das erste und das zweite Element durch eine Schnur (237) miteinander verbunden sind.

31. Haltevorrichtung nach dem vorhergehenden Anspruch, **dadurch gekennzeichnet, dass** sie durch Einspritzen von Kunststoffmaterial in eine Form gebildet ist.

32. Haltevorrichtung nach Anspruch 24, **dadurch gekennzeichnet, dass** das erste Element eine im Wesentlichen V-förmige Platte (302) mit einem ersten und einem zweiten Schenkel (303, 305) aufweist, wobei der erste und der zweite Schenkel (303, 305) durch einen Boden miteinander verbunden sind, der gemäß einer vertikalen Achse unter dem Träger (208) angeordnet ist, wenn die Vorrichtung am Fahrzeug angebracht ist, wobei der erste Schenkel (303) ein elastisches Mittel (306) zum Einhaken an den Träger (208) des Schalters (28) aufweist, dass eine Nut (312) zwischen dem ersten und dem zweiten Schenkel (303, 305) vorgesehen ist, um ein Ende des Kontaktgebers (30) aufzunehmen, und dass das zweite Element durch ein Ende (318) des zweiten Schenkels (305) gebildet ist, das eine Anlagefläche für die Abdeckung (40) der Steuerstange aufweist.

33. Haltevorrichtung nach dem vorhergehenden Anspruch, **dadurch gekennzeichnet, dass** die Platte einen dritten Schenkel (320) aufweist, der im Wesentlichen senkrecht zum ersten und zum zweiten Schenkel (303, 305) verläuft, wobei der dritte Schenkel (320) an einem von der Pedalanordnung hervorstehenden Element anliegt und seine Anlage verlassen kann, wenn die Vorrichtung von dem Pedal mitgenommen wird.

34. Haltevorrichtung nach Anspruch 32 oder 33, **dadurch gekennzeichnet, dass** das elastische Mittel (306) durch einen Draht (308) gebildet ist, der von einer Feder (309) des Typs "Wäscheklammer" so zurückgestellt wird, dass er den ersten Schenkel (303) berührt.
